# EUROPEAN PATENT APPLICATION

(11) **EP 4 842 089 A1**
(43) Date of publication of application: **18.11.2026**
(21) Application number: 25738311.7
(22) Date of filing: 02.01.2025
(51) Int. Cl.: H04W 56/00

(54) **TIMING ADVANCE ACQUISITION METHOD AND APPARATUS, AND STORAGE MEDIUM**

(30) Priority: 12.01.2024 CN 202410053672; 10.09.2024 CN 202411265683
(71) Applicant: Datang Mobile Communications Equipment Co., Ltd., Beijing 100085 (CN)
(72) Inventor: LUO, Yajuan, Beijing 100085 (CN); GAO, Qiubin, Beijing 100085 (CN); LI, Hui, Beijing 100085 (CN); HUANG, Qiuping, Beijing 100085 (CN); SONG, Lei, Beijing 100085 (CN)
(74) Representative: Studio Torta S.p.A.
(86) International application number: PCT/CN2025/070288
(87) International publication number: WO 2025/148780

(57) **Abstract**

The present disclosure provides a method and apparatus for acquiring a timing advance, and a storage medium, relating to the field of communication technology. The method includes: sending Msg1 to a first network device based on a spatial filter; or sending an SRS to a first network device based on a spatial filter, where the spatial filter is a spatial filter corresponding to the SRS, or the spatial filter is a specified spatial filter; receiving a response message sent by a second network device, where the response message includes the timing advance, and the response message is sent by the first network device to the second network device. For a UL-only TRP scenario, when there is no downlink communication link between a network device and a terminal device, during a process of acquiring a TA, a spatial filter used for sending a message in a random access procedure to the network device is determined, so that the terminal device can send the message in the random access procedure to the network device and the terminal device can acquire the TA.

## Description

This application claims priority to Chinese Patent Application No. 202410053672.2, filed to the China National Intellectual Property Administration on January 12, 2024 and entitled "METHOD AND APPARATUS FOR ACQUIRING TIMING ADVANCE, AND STORAGE MEDIUM", the contents of which are hereby incorporated by reference in its entirety.

This application claims priority to Chinese Patent Application No. 202411265683.3, filed to the China National Intellectual Property Administration on September 10, 2024 and entitled "METHOD AND APPARATUS FOR ACQUIRING TIMING ADVANCE, AND STORAGE MEDIUM", the contents of which are hereby incorporated by reference in its entirety.

### TECHNICAL FIELD

The present disclosure relates to the field of communication technology, and in particular, to a method and apparatus for acquiring a timing advance, and a storage medium.

### BACKGROUND

During communication between a terminal device and a network device, a situation often arises where there is no downlink communication link between the terminal device and the network device (i.e., a UL-only TRP scenario).

In the above scenario, the network device cannot send downlink information to the terminal device. Consequently, the network device cannot inform the terminal device of a spatial filter to be used for signaling feedback during a random access procedure, which causes the terminal device to be unable to send signaling during the random access procedure to the network device, and thus the terminal device cannot acquire a timing advance (Timing Advance, TA).

### SUMMARY

The present disclosure provides a method and apparatus for acquiring a timing advance, and a storage medium, so that in a case where there is no downlink communication link between a terminal device and a network device (i.e., a UL-only TRP scenario), the terminal device can send signaling in a random access procedure to the network device based on a spatial filter, enabling the terminal device to acquire a TA in a timely manner.

In a first aspect, the present disclosure provides a method for acquiring a timing advance, where the method includes:
sending Msg1 to a first network device based on a spatial filter, where the Msg1 includes a preamble, the preamble is used to determine the timing advance, and the spatial filter is a spatial filter corresponding to a sounding reference signal or the spatial filter is a specified spatial filter; or sending a sounding reference signal to a first network device based on a spatial filter, where the sounding reference signal is used to determine the timing advance, and the spatial filter is a spatial filter corresponding to the sounding reference signal or the spatial filter is a specified spatial filter;
receiving a response message sent by a second network device, where the response message includes the timing advance, and the response message is sent by the first network device to the second network device.

In the embodiment, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA. Furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA.

In some embodiments, when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In the embodiment, multiple selection manners of spatial filters are provided. The spatial filter used by the terminal device to send the Msg1 to the first network device may be a spatial filter corresponding to a sounding reference signal (SRS) associated with the Msg1, or a fixed spatial filter, or a spatial filter in a preset group of spatial filters. This facilitates the terminal device to send the Msg1 or the SRS in the random access procedure to the first network device based on the spatial filter.

In some embodiments, the method further includes:
receiving first indication information sent by the second network device, where the first indication information is used to indicate the sounding reference signal associated with the Msg1.

In the embodiment, the second network device needs to send the first indication information to the terminal device, where the first indication information is used to indicate the SRS associated with the Msg1. Then the terminal device can determine, according to the first indication information, the SRS associated with the Msg1, and further determine that a spatial filter (i.e., a beam) used to send the Msg1 to the first network device is a spatial filter corresponding to the sounding reference signal (SRS).

In some embodiments, the receiving the first indication information sent by the second network device includes:
receiving first downlink control information sent by the second network device; where the first downlink control information includes the first indication information;
or receiving a first radio resource control message sent by the second network device; where the first radio resource control message includes the first indication information;
or receiving a first media access control message sent by the second network device; where the first media access control message includes the first indication information.

In the embodiment, the first indication information may be carried by the following messages: first downlink control information (PDCCH order information), a first radio resource control (RRC) message, a first media access control (MAC CE) message. Then the second network device can notify the terminal device of the first indication information in multiple manners, so that the terminal device can determine the SRS associated with the Msg1, and further determine that a spatial filter (i.e., a beam) used to send the Msg1 to the first network device is a spatial filter corresponding to the sounding reference signal (SRS).

In some embodiments, the method further includes:
receiving second indication information sent by the second network device, where the second indication information is used to indicate the number of transmission repetitions of the Msg1.

In the embodiment, the second network device needs to indicate the number of transmission repetitions of the Msg1. The second network device sends the second indication information to the terminal device, where the second indication information is used to indicate the number of transmission repetitions (repetition) of the Msg1. Then the terminal device sends the Msg1 to the first network device by using the fixed spatial filter based on the number of transmission repetitions (repetition) indicated by the second indication information.

In some embodiments, the receiving the second indication information sent by the second network device includes:
receiving a second radio resource control message sent by the second network device; where the second radio resource control message includes the second indication information;
or receiving a second media access control message sent by the second network device; where the second media access control message includes the second indication information.

In the embodiment, the second indication information may be carried by the following messages: a second radio resource control (RRC) message, a second media access control (MAC CE) message. Then the second network device can notify the terminal device of the second indication information in multiple manners, so that the terminal device sends the Msg1 to the first network device by using the fixed spatial filter based on the number of transmission repetitions (repetition) indicated by the second indication information.

In some embodiments, the method further includes:
determining configuration information of the sounding reference signal, where the configuration information is used to indicate time-domain resources for sending the sounding reference signal;
or receiving third indication information sent by the second network device, where the third indication information is used to indicate a cell to which the sounding reference signal belongs.

In the embodiment, the configuration information of the sounding reference signal indicates time-domain resources for sending the sounding reference signal. Alternatively, the second network device needs to send the third indication information to the terminal device, where the third indication information is used to indicate the cell to which the sounding reference signal belongs. Then the terminal device can determine time-domain resources of the SRS, or determine a cell to which the SRS belongs.

In some embodiments, the receiving the third indication information sent by the second network device includes:
receiving first downlink control information sent by the second network device; where the first downlink control information includes the third indication information; or the first downlink control information is used to indicate the terminal device to send the sounding reference signal, and the sounding reference signal to be sent to the first network device includes the third indication information;
or receiving a third radio resource control message sent by the second network device; where the third radio resource control message includes the third indication information;
or receiving a third media access control message sent by the second network device; where the third media access control message includes the third indication information.

In the embodiment, the third indication information is indicated in multiple manners, so that the terminal device can determine a cell to which the SRS belongs.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In the embodiment, multiple selection manners of spatial filters are provided, facilitating the terminal device to send a message in the random access procedure to the first network device based on the spatial filter, so that the terminal device can acquire the TA.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point;
the path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In the embodiment, the terminal device can determine transmission power of the Msg1 according to the above parameters. Then the terminal device sends the Msg1 to the first network device according to the transmission power for sending the Msg1 and the spatial filter.

In some embodiments, the method further includes:
receiving fifth indication information sent by the second network device; where the fifth indication information is used to indicate the path loss power of the uplink-only reception point, or the fifth indication information is used to indicate the uplink received signal power difference.

In the embodiment, the second network device needs to send the path loss power of the uplink-only reception point or the uplink received signal power difference to the terminal device in advance. The second network device may send the fifth indication information to the terminal device; where the fifth indication information is used to indicate the path loss power of the uplink-only reception point, or the fifth indication information is used to indicate the uplink received signal power difference. Thereby, the terminal device determines transmission power of the Msg1 based on the path loss power of the uplink-only reception point, so as to send the Msg1 to the first network device. Alternatively, the terminal device determines transmission power of the Msg1 based on the uplink received signal power difference, so as to send the Msg1 to the first network device.

In some embodiments, the receiving the fifth indication information sent by the second network device includes:
receiving second downlink control information sent by the second network device; where the second downlink control information includes the fifth indication information;
or receiving higher-layer signaling sent by the second network device; where the higher-layer signaling includes the fifth indication information.

In the embodiment, multiple indication manners for indicating the path loss power of the uplink-only reception point or the uplink received signal power difference are provided. The fifth indication information may be a separate piece of signaling, or the fifth indication information is carried by the higher-layer signaling, or the fifth indication information is carried by the downlink control information. This facilitates the terminal device to determine the transmission power of the Msg1 based on the path loss power of the uplink-only reception point or the uplink received signal power difference, so as to send the Msg1 to the first network device.

In some embodiments, transmission power for sending the sounding reference signal is a minimum value of the following powers: a maximum transmission power of the terminal device and a first preset power; where the first preset power is determined based on a transmission power difference;
the transmission power difference is a power difference between transmission power of the sounding reference signal sent by the first network device and transmission power of the sounding reference signal sent by the second network device.

In the embodiment, the terminal device can determine the transmission power of the SRS according to the above parameters. Then the terminal device sends the SRS to the first network device according to the transmission power for sending the SRS and the spatial filter.

In some embodiments, the method further includes:
receiving fourth indication information sent by the second network device, where the fourth indication information is used to indicate the transmission power difference.

In the embodiment, the second network device needs to send the transmission power difference to the terminal device in advance. The second network device may send the fourth indication information to the terminal device; where the fourth indication information is used to indicate the transmission power difference. Thereby, the terminal device determines the transmission power of the SRS based on the transmission power difference, so as to send the SRS to the first network device.

In some embodiments, the receiving the fourth indication information sent by the second network device includes:
receiving first downlink control information sent by the second network device, where the first downlink control information includes the fourth indication information;
or receiving a fourth radio resource control message sent by the second network device; where the fourth radio resource control message includes the fourth indication information;
or receiving a fourth media access control message sent by the second network device; where the fourth media access control message includes the fourth indication information.

In the embodiment, multiple indication manners for indicating the transmission power difference are provided. The fourth indication information may be a separate piece of signaling, or the fourth indication information is carried by the higher-layer signaling, or the fourth indication information is carried by downlink control information. This facilitates the terminal device to determine the transmission power of the SRS based on the transmission power difference, so as to send the SRS to the first network device.

In some embodiments, the method further includes:
receiving sixth indication information sent by the second network device; where the sixth indication information is used to indicate a spatial filter with optimal performance;
sending Msg3 to the first network device based on the spatial filter indicated by the sixth indication information.

In the embodiment, the first network device sends the sixth indication information to the terminal device via the second network device; where the sixth indication information is used to indicate the spatial filter with optimal performance. This facilitates the terminal device to directly determine the spatial filter with optimal performance, and the terminal device sends the Msg3 in the random access procedure to the first network device based on the spatial filter with optimal performance.

In a second aspect, the present disclosure provides a method for acquiring a timing advance, where the method includes:
receiving Msg1 sent by a terminal device based on a spatial filter, where the Msg1 includes a preamble, the preamble is used to determine the timing advance, and the spatial filter is a spatial filter corresponding to a sounding reference signal or the spatial filter is a specified spatial filter; or receiving a sounding reference signal sent by a terminal device based on a spatial filter, where the sounding reference signal is used to determine the timing advance, and the spatial filter is a spatial filter corresponding to the sounding reference signal or the spatial filter is a specified spatial filter;
sending a response message to a second network device, where the response message includes the timing advance, and the response message is used to be fed back to the terminal device.

In the embodiment, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA. Furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA.

In some embodiments, when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In the embodiment, multiple selection manners of spatial filters are provided. The spatial filter used by the terminal device to send the Msg1 to the first network device may be a spatial filter corresponding to a sounding reference signal (SRS) associated with the Msg1, or a fixed spatial filter, or a spatial filter in a preset group of spatial filters. This facilitates the terminal device to send the Msg1 or the SRS in the random access procedure to the first network device based on the spatial filter.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In the embodiment, multiple selection manners of spatial filters are provided, facilitating the terminal device to send a message in the random access procedure to the first network device based on the spatial filter, so that the terminal device can acquire the TA.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point;
the path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In the embodiment, the terminal device can determine transmission power of the Msg1 according to the above parameters. Then the terminal device sends the Msg1 to the first network device according to the transmission power for sending the Msg1 and the spatial filter.

In some embodiments, transmission power for sending the sounding reference signal is a minimum value of the following powers: a maximum transmission power of the terminal device and a first preset power; where the first preset power is determined based on a transmission power difference;
the transmission power difference is a power difference between transmission power of the sounding reference signal sent by the first network device and transmission power of the sounding reference signal sent by the second network device.

In the embodiment, the terminal device can determine the transmission power of the SRS according to the above parameters. Then the terminal device sends the SRS to the first network device according to the transmission power for sending the SRS and the spatial filter.

In a third aspect, the present disclosure provides a method for acquiring a timing advance, where the method includes:
sending first indication information to a terminal device, where the first indication information is used to indicate a sounding reference signal associated with Msg1;
where the first indication information is used to send the Msg1 to a first network device based on a spatial filter corresponding to the sounding reference signal indicated by the first indication information, where the Msg1 includes a preamble, the preamble is used to determine the timing advance, and the spatial filter is a spatial filter corresponding to the sounding reference signal or the spatial filter is a specified spatial filter; or the first indication information is used to send a sounding reference signal to a first network device based on a spatial filter corresponding to the sounding reference signal indicated by the first indication information, and the sounding reference signal is used to determine the timing advance, or the spatial filter is a specified spatial filter;
receiving a response message sent by the first network device, and sending the response message to the terminal device, where the response message includes the timing advance.

In the embodiment, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA. Furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA.

In some embodiments, when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In the embodiment, multiple selection manners of spatial filters are provided. The spatial filter used by the terminal device to send the Msg1 to the first network device may be a spatial filter corresponding to a sounding reference signal (SRS) associated with the Msg1, or a fixed spatial filter, or a spatial filter in a preset group of spatial filters. This facilitates the terminal device to send the Msg1 or the SRS in the random access procedure to the first network device based on the spatial filter.

In some embodiments, the method further includes:
sending the first indication information to a terminal device, where the first indication information is used to indicate the sounding reference signal associated with Msg1.

In the embodiment, the second network device needs to send the first indication information to the terminal device, where the first indication information is used to indicate the SRS associated with the Msg1. Then the terminal device can determine, according to the first indication information, the SRS associated with the Msg1, and further determine that a spatial filter (i.e., a beam) used to send the Msg1 to the first network device is a spatial filter corresponding to the sounding reference signal (SRS).

In some embodiments, the sending the first indication information to the terminal device includes:
sending first downlink control information to the terminal device; where the first downlink control information includes the first indication information;
or sending a first radio resource control message to the terminal device; where the first radio resource control message includes the first indication information;
or sending a first media access control message to the terminal device; where the first media access control message includes the first indication information.

In the embodiment, the first indication information may be carried by the following messages: first downlink control information (PDCCH order information), a first radio resource control (RRC) message, a first media access control (MAC CE) message. Then the second network device can notify the terminal device of the first indication information in multiple manners, so that the terminal device can determine the SRS associated with the Msg1, and further determine that a spatial filter (i.e., a beam) used to send the Msg1 to the first network device is a spatial filter corresponding to the sounding reference signal (SRS).

In some embodiments, the method further includes:
sending second indication information to the terminal device; where the second indication information is used to indicate the number of transmission repetitions of the Msg1.

In the embodiment, the second network device needs to indicate the number of transmission repetitions of the Msg1. The second network device sends the second indication information to the terminal device, where the second indication information is used to indicate the number of transmission repetitions (repetition) of the Msg1. Then the terminal device sends the Msg1 to the first network device by using the fixed spatial filter based on the number of transmission repetitions (repetition) indicated by the second indication information.

In some embodiments, the sending the second indication information to the terminal device includes:
sending a second radio resource control message to the terminal device; where the second radio resource control message includes the second indication information;
or sending a second media access control message to the terminal device; where the second media access control message includes the second indication information.

In the embodiment, the second indication information may be carried by the following messages: a second radio resource control (RRC) message, a second media access control (MAC CE) message. Then the second network device can notify the terminal device of the second indication information in multiple manners, so that the terminal device sends the Msg1 to the first network device by using the fixed spatial filter based on the number of transmission repetitions (repetition) indicated by the second indication information.

In some embodiments, the method further includes:
determining configuration information of the sounding reference signal, where the configuration information is used to indicate time-domain resources for sending the sounding reference signal;
or receiving third indication information sent by the second network device, where the third indication information is used to indicate a cell to which the sounding reference signal belongs.

In the embodiment, the configuration information of the sounding reference signal indicates time-domain resources for sending the sounding reference signal. Alternatively, the second network device needs to send the third indication information to the terminal device, where the third indication information is used to indicate the cell to which the sounding reference signal belongs. Then the terminal device can determine time-domain resources of the SRS, or determine a cell to which the SRS belongs.

In some embodiments, the sending the third indication information to the terminal device includes:
sending first downlink control information to the terminal device; where the first downlink control information includes the third indication information, or the first downlink control information is used to indicate the terminal device to send the sounding reference signal, and the sounding reference signal to be sent to the first network device includes the third indication information;
or sending a third radio resource control message to the terminal device; where the third radio resource control message includes the third indication information;
or sending a third media access control message to the terminal device; where the third media access control message includes the third indication information.

In the embodiment, the third indication information is indicated in multiple manners, so that the terminal device can determine a cell to which the SRS belongs.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In the embodiment, multiple selection manners of spatial filters are provided, facilitating the terminal device to send a message in the random access procedure to the first network device based on the spatial filter, so that the terminal device can acquire the TA.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point;
the path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In the embodiment, the terminal device can determine transmission power of the Msg1 according to the above parameters. Then the terminal device sends the Msg1 to the first network device according to the transmission power for sending the Msg1 and the spatial filter.

In some embodiments, the method further includes:
sending fifth indication information to the terminal device; where the fifth indication information is used to indicate the path loss power of the uplink-only reception point, or the fifth indication information is used to indicate the uplink received signal power difference.

In the embodiment, the second network device needs to send the path loss power of the uplink-only reception point or the uplink received signal power difference to the terminal device in advance. The second network device may send the fifth indication information to the terminal device; where the fifth indication information is used to indicate the path loss power of the uplink-only reception point, or the fifth indication information is used to indicate the uplink received signal power difference. Thereby, the terminal device determines transmission power of the Msg1 based on the path loss power of the uplink-only reception point, so as to send the Msg1 to the first network device. Alternatively, the terminal device determines transmission power of the Msg1 based on the uplink received signal power difference, so as to send the Msg1 to the first network device.

In some embodiments, the sending the fifth indication information to the terminal device includes:
sending second downlink control information to the terminal device; where the second downlink control information includes the fifth indication information;
or sending higher-layer signaling to the terminal device; where the higher-layer signaling includes the fifth indication information.

In the embodiment, multiple indication manners for indicating the path loss power of the uplink-only reception point or the uplink received signal power difference are provided. The fifth indication information may be a separate piece of signaling, or the fifth indication information is carried by the higher-layer signaling, or the fifth indication information is carried by the downlink control information. This facilitates the terminal device to determine the transmission power of the Msg1 based on the path loss power of the uplink-only reception point or the uplink received signal power difference, so as to send the Msg1 to the first network device.

In some embodiments, transmission power for sending the sounding reference signal is a minimum value of the following powers: a maximum transmission power of the terminal device and a first preset power; where the first preset power is determined based on a transmission power difference;
the transmission power difference is a power difference between transmission power of the sounding reference signal sent by the first network device and transmission power of the sounding reference signal sent by the second network device.

In the embodiment, the terminal device can determine the transmission power of the SRS according to the above parameters. Then the terminal device sends the SRS to the first network device according to the transmission power for sending the SRS and the spatial filter.

In some embodiments, the method further includes:
sending fourth indication information to the terminal device; where the fourth indication information is used to indicate the transmission power difference.

In the embodiment, the second network device needs to send the transmission power difference to the terminal device in advance. The second network device may send the fourth indication information to the terminal device; where the fourth indication information is used to indicate the transmission power difference. Thereby, the terminal device determines the transmission power of the SRS based on the transmission power difference, so as to send the SRS to the first network device.

In some embodiments, the sending the fourth indication information to the terminal device includes:
sending first downlink control information to the terminal device, where the first downlink control information includes the fourth indication information;
or sending a fourth radio resource control message to the terminal device; where the fourth radio resource control message includes the fourth indication information;
or sending a fourth media access control message to the terminal device; where the fourth media access control message includes the fourth indication information.

In the embodiment, multiple indication manners for indicating the transmission power difference are provided. The fourth indication information may be a separate piece of signaling, or the fourth indication information is carried by the higher-layer signaling, or the fourth indication information is carried by downlink control information. This facilitates the terminal device to determine the transmission power of the SRS based on the transmission power difference, so as to send the SRS to the first network device.

In some embodiments, the method further includes:
sending sixth indication information to the terminal device; where the sixth indication information is used to indicate a spatial filter with optimal performance; and a spatial filter indicated by the sixth indication information is used to send Msg3 to the first network device based on the spatial filter.

In the embodiment, the first network device sends the sixth indication information to the terminal device via the second network device; where the sixth indication information is used to indicate the spatial filter with optimal performance. This facilitates the terminal device to directly determine the spatial filter with optimal performance, and the terminal device sends the Msg3 in the random access procedure to the first network device based on the spatial filter with optimal performance.

In a fourth aspect, the present disclosure provides an apparatus for acquiring a timing advance. The apparatus includes: a memory, a transceiver, and a processor:
where the memory is configured to store a computer program; the transceiver is configured to receive and transmit data under control of the processor; and the processor is configured to read the computer program in the memory and perform the following operations:
sending Msg1 to a first network device based on a spatial filter, where the Msg1 includes a preamble, the preamble is used to determine the timing advance, and the spatial filter is a spatial filter corresponding to a sounding reference signal or the spatial filter is a specified spatial filter; or sending a sounding reference signal to a first network device based on a spatial filter, where the sounding reference signal is used to determine the timing advance, and the spatial filter is a spatial filter corresponding to the sounding reference signal or the spatial filter is a specified spatial filter;
receiving a response message sent by a second network device, where the response message includes the timing advance, and the response message is sent by the first network device to the second network device.

In some embodiments, when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, the processor is further configured to:
receive first indication information sent by the second network device, where the first indication information is used to indicate the sounding reference signal associated with the Msg1.

In some embodiments, when receiving the first indication information sent by the second network device, the processor is configured to:
receive first downlink control information sent by the second network device; where the first downlink control information includes the first indication information;
or receive a first radio resource control message sent by the second network device; where the first radio resource control message includes the first indication information;
or receive a first media access control message sent by the second network device; where the first media access control message includes the first indication information.

In some embodiments, the processor is further configured to:
receive second indication information sent by the second network device, where the second indication information is used to indicate the number of transmission repetitions of the Msg1.

In some embodiments, when receiving the second indication information sent by the second network device, the processor is configured to:
receive a second radio resource control message sent by the second network device; where the second radio resource control message includes the second indication information;
or receive a second media access control message sent by the second network device; where the second media access control message includes the second indication information.

In some embodiments, the processor is further configured to:
determine configuration information of the sounding reference signal, where the configuration information is used to indicate time-domain resources for sending the sounding reference signal;
or receive third indication information sent by the second network device, where the third indication information is used to indicate a cell to which the sounding reference signal belongs.

In some embodiments, when receiving the third indication information sent by the second network device, the processor is configured to:
receive first downlink control information sent by the second network device; where the first downlink control information includes the third indication information; or the first downlink control information is used to indicate the terminal device to send the sounding reference signal, and the sounding reference signal to be sent to the first network device includes the third indication information;
or receive a third radio resource control message sent by the second network device; where the third radio resource control message includes the third indication information;
or receive a third media access control message sent by the second network device; where the third media access control message includes the third indication information.

In some embodiments, when the spatial filter is the spatial filter corresponding to the sounding reference signal, the spatial filter is any one of the following: the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point;
the path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In some embodiments, the processor is further configured to:
receive fifth indication information sent by the second network device; where the fifth indication information is used to indicate the path loss power of the uplink-only reception point, or the fifth indication information is used to indicate the uplink received signal power difference.

In some embodiments, when receiving the fifth indication information sent by the second network device, the processor is configured to:
receive second downlink control information sent by the second network device; where the second downlink control information includes the fifth indication information;
or receive higher-layer signaling sent by the second network device; where the higher-layer signaling includes the fifth indication information.

In some embodiments, transmission power for sending the sounding reference signal is a minimum value of the following powers: a maximum transmission power of the terminal device and a first preset power; where the first preset power is determined based on a transmission power difference;
the transmission power difference is a power difference between transmission power of the sounding reference signal sent by the first network device and transmission power of the sounding reference signal sent by the second network device.

In some embodiments, the processor is further configured to:
receive fourth indication information sent by the second network device, where the fourth indication information is used to indicate the transmission power difference.

In some embodiments, when receiving the fourth indication information sent by the second network device, the processor is configured to:
receive first downlink control information sent by the second network device, where the first downlink control information includes the fourth indication information;
or receive a fourth radio resource control message sent by the second network device; where the fourth radio resource control message includes the fourth indication information;
or receive a fourth media access control message sent by the second network device; where the fourth media access control message includes the fourth indication information.

In some embodiments, the processor is further configured to:
receive sixth indication information sent by the second network device; where the sixth indication information is used to indicate a spatial filter with optimal performance;
send Msg3 to the first network device based on the spatial filter indicated by the sixth indication information.

In a fifth aspect, the present disclosure provides an apparatus for acquiring a timing advance. The apparatus includes: a memory, a transceiver, and a processor:
where the memory is configured to store a computer program; the transceiver is configured to receive and transmit data under control of the processor; and the processor is configured to read the computer program in the memory and perform the following operations:
receiving Msg1 sent by a terminal device based on a spatial filter, where the Msg1 includes a preamble, the preamble is used to determine the timing advance, and the spatial filter is a spatial filter corresponding to a sounding reference signal or the spatial filter is a specified spatial filter; or receiving a sounding reference signal sent by the terminal device based on a spatial filter, where the sounding reference signal is used to determine the timing advance, and the spatial filter is a spatial filter corresponding to the sounding reference signal or the spatial filter is a specified spatial filter;
sending a response message to a second network device, where the response message includes the timing advance, and the response message is used to be fed back to the terminal device.

In some embodiments, when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point;
the path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In some embodiments, transmission power for sending the sounding reference signal is a minimum value of the following powers: a maximum transmission power of the terminal device and a first preset power; where the first preset power is determined based on a transmission power difference;
the transmission power difference is a power difference between transmission power of the sounding reference signal sent by the first network device and transmission power of the sounding reference signal sent by the second network device.

In a sixth aspect, the present disclosure provides an apparatus for acquiring a timing advance. The apparatus includes: a memory, a transceiver, and a processor:
where the memory is configured to store a computer program; the transceiver is configured to receive and transmit data under control of the processor; and the processor is configured to read the computer program in the memory and perform the following operations:
sending first indication information to a terminal device, where the first indication information is used to indicate a sounding reference signal associated with Msg1;
where the first indication information is used to send the Msg1 to a first network device based on a spatial filter corresponding to the sounding reference signal indicated by the first indication information, where the Msg1 includes a preamble, the preamble is used to determine the timing advance, and the spatial filter is a spatial filter corresponding to the sounding reference signal or the spatial filter is a specified spatial filter; or the first indication information is used to send a sounding reference signal to a first network device based on a spatial filter corresponding to the sounding reference signal indicated by the first indication information, and the sounding reference signal is used to determine the timing advance, or the spatial filter is a specified spatial filter;
receiving a response message sent by the first network device, and sending the response message to the terminal device, where the response message includes the timing advance.

In some embodiments, when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, the processor is further configured to:
send the first indication information to a terminal device, where the first indication information is used to indicate the sounding reference signal associated with Msg1.

In some embodiments, when sending the first indication information to the terminal device, the processor is configured to:
send first downlink control information to the terminal device; where the first downlink control information includes the first indication information;
or send a first radio resource control message to the terminal device; where the first radio resource control message includes the first indication information;
or send a first media access control message to the terminal device; where the first media access control message includes the first indication information.

In some embodiments, the processor is further configured to:
send second indication information to the terminal device; where the second indication information is used to indicate the number of transmission repetitions of the Msg1.

In some embodiments, when sending the second indication information to the terminal device, the processor is configured to:
send a second radio resource control message to the terminal device; where the second radio resource control message includes the second indication information;
or send a second media access control message to the terminal device; where the second media access control message includes the second indication information.

In some embodiments, the processor is further configured to:
determine configuration information of the sounding reference signal, where the configuration information is used to indicate time-domain resources for sending the sounding reference signal;
or receive third indication information sent by the second network device, where the third indication information is used to indicate a cell to which the sounding reference signal belongs.

In some embodiments, when sending the third indication information to the terminal device, the processor is configured to:
send first downlink control information to the terminal device; where the first downlink control information includes the third indication information, or the first downlink control information is used to indicate the terminal device to send the sounding reference signal, and the sounding reference signal to be sent to the first network device includes the third indication information;
or send a third radio resource control message to the terminal device; where the third radio resource control message includes the third indication information;
or send a third media access control message to the terminal device; where the third media access control message includes the third indication information.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point;
the path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In some embodiments, the processor is further configured to:
send fifth indication information to the terminal device; where the fifth indication information is used to indicate the path loss power of the uplink-only reception point, or the fifth indication information is used to indicate the uplink received signal power difference.

In some embodiments, when sending the fifth indication information to the terminal device, the processor is configured to:
send second downlink control information to the terminal device; where the second downlink control information includes the fifth indication information;
or send higher-layer signaling to the terminal device; where the higher-layer signaling includes the fifth indication information.

In some embodiments, transmission power for sending the sounding reference signal is a minimum value of the following powers: a maximum transmission power of the terminal device and a first preset power; where the first preset power is determined based on a transmission power difference;
the transmission power difference is a power difference between transmission power of the sounding reference signal sent by the first network device and transmission power of the sounding reference signal sent by the second network device.

In some embodiments, the processor is further configured to:
send fourth indication information to the terminal device; where the fourth indication information is used to indicate the transmission power difference.

In some embodiments, when sending the fourth indication information to the terminal device, the processor is configured to:
send first downlink control information to the terminal device, where the first downlink control information includes the fourth indication information;
or send a fourth radio resource control message to the terminal device; where the fourth radio resource control message includes the fourth indication information;
or send a fourth media access control message to the terminal device; where the fourth media access control message includes the fourth indication information.

In some embodiments, the processor is further configured to:
send sixth indication information to the terminal device; where the sixth indication information is used to indicate a spatial filter with optimal performance; and a spatial filter indicated by the sixth indication information is used to send Msg3 to the first network device based on the spatial filter.

In a seventh aspect, the present disclosure provides an apparatus for acquiring a timing advance. The apparatus includes:
a first sending module, configured to send Msg1 to a first network device based on a spatial filter, where the Msg1 includes a preamble, the preamble is used to determine the timing advance, and the spatial filter is a spatial filter corresponding to a sounding reference signal or the spatial filter is a specified spatial filter; or send a sounding reference signal to a first network device based on a spatial filter, where the sounding reference signal is used to determine the timing advance, and the spatial filter is a spatial filter corresponding to the sounding reference signal or the spatial filter is a specified spatial filter;
a first receiving module, configured to receive a response message sent by a second network device, where the response message includes the timing advance, and the response message is sent by the first network device to the second network device.

In an eighth aspect, the present disclosure provides an apparatus for acquiring a timing advance. The apparatus includes:
a receiving module, configured to receive Msg1 sent by a terminal device based on a spatial filter, where the Msg1 includes a preamble, the preamble is used to determine the timing advance, and the spatial filter is a spatial filter corresponding to a sounding reference signal or the spatial filter is a specified spatial filter; or receive a sounding reference signal sent by the terminal device based on a spatial filter, where the sounding reference signal is used to determine the timing advance, and the spatial filter is a spatial filter corresponding to the sounding reference signal or the spatial filter is a specified spatial filter;
a sending module, configured to send a response message to a second network device, where the response message includes the timing advance, and the response message is used to be fed back to the terminal device.

In a ninth aspect, the present disclosure provides an apparatus for acquiring a timing advance. The apparatus includes:
a first sending module, configured to send first indication information to a terminal device, where the first indication information is used to indicate a sounding reference signal associated with Msg1;
where the first indication information is used to send the Msg1 to a first network device based on a spatial filter corresponding to the sounding reference signal indicated by the first indication information, where the Msg1 includes a preamble, the preamble is used to determine the timing advance, and the spatial filter is a spatial filter corresponding to the sounding reference signal or the spatial filter is a specified spatial filter; or the first indication information is used to send a sounding reference signal to a first network device based on a spatial filter corresponding to the sounding reference signal indicated by the first indication information, and the sounding reference signal is used to determine the timing advance, or the spatial filter is a specified spatial filter;
a first receiving module, configured to receive a response message sent by the first network device, and sending the response message to the terminal device, where the response message includes the timing advance.

In a tenth aspect, the present disclosure provides a processor-readable storage medium, where the processor-readable storage medium stores a computer program, and the computer program is used to enable a processor to perform the method of any one of the first aspect, or the second aspect, or the third aspect.

The present disclosure provides a method and apparatus for acquire timing advance, and a storage medium, which can implement the following: for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA; furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined, so that the terminal device can send the message in the random access procedure to the network device and the terminal device can acquire the TA.

It should be understood that the content described above in the Summary section is not intended to define key or important features of the embodiments of the present disclosure, nor is it intended to limit the scope of the present disclosure. Other features of the present disclosure will become readily understandable from the following description.

### BRIEF DESCRIPTION OF DRAWINGS

To illustrate the technical solutions in the present disclosure or in the prior art more clearly, the following briefly introduces the drawings used in the embodiments or the description of the prior art. Obviously, the drawings described below are some embodiments of the present disclosure. For those of ordinary skill in the art, other drawings can be obtained based on these drawings without creative effort.
FIG. 1 is a scenario diagram provided by the present disclosure.
FIG. 2 is a schematic flowchart of a method for acquiring a timing advance provided by an embodiment of the present disclosure.
FIG. 3 is a schematic flowchart of a method for acquiring a timing advance provided by an embodiment of the present disclosure.
FIG. 4 is schematic diagram I of a spatial filter provided by the present disclosure.
FIG. 5 is a schematic flowchart of a method for acquiring a timing advance provided by an embodiment of the present disclosure.
FIG. 6 is schematic diagram II of a spatial filter provided by the present disclosure.
FIG. 7 is a schematic flowchart of a method for acquiring a timing advance provided by an embodiment of the present disclosure.
FIG. 8 is a schematic flowchart of a method for acquiring a timing advance provided by an embodiment of the present disclosure.
FIG. 9 is a schematic flowchart of a method for acquiring a timing advance provided by an embodiment of the present disclosure.
FIG. 10 is a schematic signaling interaction flowchart of a method for acquiring a timing advance provided by an embodiment of the present disclosure.
FIG. 11 is a schematic signaling interaction flowchart of a method for acquiring a timing advance provided by an embodiment of the present disclosure.
FIG. 12 is a schematic signaling interaction flowchart of a method for acquiring a timing advance provided by an embodiment of the present disclosure.
FIG. 13 is a schematic signaling interaction flowchart of a method for acquiring a timing advance provided by an embodiment of the present disclosure.
FIG. 14 is a schematic signaling interaction flowchart of a method for acquiring a timing advance provided by an embodiment of the present disclosure.
FIG. 15 is a schematic structural diagram of an apparatus for acquiring a timing advance provided by an embodiment of the present disclosure.
FIG. 16 is a schematic structural diagram of an apparatus for acquiring a timing advance provided by an embodiment of the present disclosure.
FIG. 17 is a schematic structural diagram of an apparatus for acquiring a timing advance provided by an embodiment of the present disclosure.
FIG. 18 is a schematic structural diagram of an apparatus for acquiring a timing advance provided by an embodiment of the present disclosure.
FIG. 19 is a schematic structural diagram of an apparatus for acquiring a timing advance provided by an embodiment of the present disclosure.
FIG. 20 is a schematic structural diagram of an apparatus for acquiring a timing advance provided by an embodiment of the present disclosure.

### DESCRIPTION OF EMBODIMENTS

In embodiments of the present disclosure, a term "and/or" describes an association relationship of associated objects, indicating that three relationships may exist. For example, A and/or B may represent the following three cases: A exists alone, both A and B exist, and B exists alone. The character "/" generally indicates that the associated objects before and after it form an "or" relationship.

In embodiments of the present disclosure, a term "multiple" means two or more, and other quantifiers are similar thereto.

The technical solutions in the embodiments of the present disclosure will be clearly and completely described below with reference to the drawings in the embodiments of the present disclosure. Obviously, the described embodiments are only some of the embodiments of the present disclosure, not all of them. Based on the embodiments of the present disclosure, all other embodiments obtained by those of ordinary skill in the art without creative efforts shall fall within the protection scope of the present disclosure.

For a clear understanding of the technical solutions of the present disclosure, terms involved in the embodiments of the present disclosure are first explained as follows:
5G: 5th Generation Mobile Communication Technology, 5th generation mobile communication technology.
UE: User Equipment, user equipment.
TA: Timing Advance, timing advance.
SRS: Sounding Reference Signal, sounding reference signal.
SSB: Synchronization Signal/PBCH Block, synchronization signal/PBCH block.
TPR: Transmission and Receiving Point, transmission and receiving point.
UL: Up Link, uplink.
RACH: Random Access Channel, random access channel.
RACH-less: Random Access Channel less, random access channel less.
PRACH: Physical Random Access Channel, physical random access channel.
PDCCH: Physical Downlink Control Channel, physical downlink control channel.
PUSCH: Physical Uplink Shared Channel, physical uplink shared channel.
PUCCH: Physical Uplink Control Channel, physical uplink control channel.
DCI: Downlink Control Information, downlink control information.
RRC: Radio Resource Control, radio resource control/radio resource control protocol.
ID: identity document, ID identification number, account number, unique code, exclusive number.
RSRP: Reference Signal Receiving power, reference signal receiving power.

The technical solutions provided by the embodiments of the present disclosure are applicable to various systems, especially 5G systems. For example, applicable systems may include a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, a LTE frequency division duplex (frequency division duplex, FDD) system, a LTE time division duplex (time division duplex, TDD) system, a long term evolution advanced (long term evolution advanced, LTE-A) system, an universal mobile telecommunication system (universal mobile telecommunication system, UMTS), a worldwide interoperability for microwave access (worldwide interoperability for microwave access, WiMAX) system, a 5G new radio (New Radio, NR) system, etc. Each of these systems includes a terminal device and a network device. The system may also include a core network part, such as an evolved packet system (Evolved Packet System, EPS), a 5G system (5GS), etc.

The terminal device involved in the embodiments of the present disclosure may be a device that provides users with voice and/or data connectivity, a handheld device with a wireless connection function, or other processing devices connected to a wireless modem. Names of the terminal device may vary in different systems. For example, in the 5G system, the terminal device may be referred to as user equipment (User Equipment, UE). Wireless terminal devices may be USB storage devices, other personal computer memory devices, and dongles. They may also communicate with one or more core networks (Core Network, CN) via a radio access network (Radio Access Network, RAN). Wireless terminal devices may be mobile terminal devices, such as mobile phones (or referred to "cellular" phones) and computers with a mobile terminal device, for example, portable, pocket-sized, handheld, built-in computer, or vehicle-mounted mobile devices that exchange voice and/or data with the radio access network, for example, personal communication service (Personal Communication Service, PCS) phones, cordless phones, session initiated protocol (Session Initiated Protocol, SIP) phones, wireless local loop (Wireless Local Loop, WLL) stations, personal digital assistants (Personal Digital Assistant, PDA), personal computers, tablet computers, machine-type communication (Machine-type Communication, MTC) terminal devices, etc. Wireless terminal device may also be referred to as systems, subscriber units (subscriber unit), subscriber stations (subscriber station), mobile stations (mobile station), mobiles (mobile), remote stations (remote station), access points (access point), remote terminals (remote terminal), access terminals (access terminal), user terminals (user terminal), user agents (user agent), user devices (user device), as well as wireless accessors, routers/modems that meet the definition constraints, which are not limited in the embodiments of the present disclosure.

The network device involved in the embodiments of the present disclosure may be a base station, which may include multiple cells serving terminals. Depending on different application scenarios, a base station may also be called as an access point, or a device in an access network that communicates with wireless terminal device over an air interface through one or more sectors, or by other names. Network device may be used to mutually convert received over-the-air frames with internet protocol (Internet Protocol, IP) packets, acting as a router between wireless terminal device and the rest of the access network, where the rest of the access network may include an internet protocol (IP) communication network. The network device may also coordinate attribute management of the air interface. For example, the network device involved in the embodiments of the present disclosure may be an evolved Node B (evolved Node B, eNB or e-NodeB) in a long term evolution (long term evolution, LTE) system, a 5G base station (gNB) in a 5G network architecture (next generation system), etc., or may be home evolved Node B (Home evolved Node B, HeNB), a relay node (relay node), a femto (femto), a pico (pico), a network test device, etc., which are not limited in the embodiments of the present disclosure. In some network architectures, the network device may include a centralized unit (centralized unit, CU) node and a distributed unit (distributed unit, DU) node, which may also be geographically separated.

One or more antennas may be used between the network device and the terminal device for multiple-input multiple-output (MIMO) transmission. The MIMO transmission may be single-user MIMO or multi-user MIMO. Depending on the form and number of antenna combinations, The MIMO transmission may be 2D-MIMO, 3D-MIMO, FD-MIMO, or massive-MIMO, and may also be diversity transmission, precoding transmission, beamforming transmission, etc.

Descriptions such as "a terminal device sends relevant information to a network-side device" in the embodiments of the present disclosure merely indicate that the terminal device sends relevant information in the form of wireless signals, whose intended recipient is the network device, and the network device can obtain the relevant information by receiving the wireless signals.

The embodiments of the present disclosure are described in detail below by taking a 5G system scenario as an example.

In a multi-DCI based multi-TRP (multi-DCI based multi-TRP) scenario, there are multiple network devices, for example, the network device is a TRP.

For example, a multi-DCI based multi-TRP (multi-DCI based multi-TRP) scenario includes two network devices, namely a first network device and a second network device. There are uplink and downlink communications between the terminal device and the first network device, and there are uplink and downlink communications between the terminal device and the second network device.

The second network device sends first downlink control information (i.e., PDCCH order information) to the terminal device, where the PDCCH order information is carried by downlink control information (DCI format 1_0), and the PDCCH order information is used to indicate the terminal device to send a message of a random access procedure to the first network device. The terminal device then sends the message of the random access procedure (e.g., Msg1) to the first network device based on a spatial filter, where the spatial filter is a spatial filter for receiving a synchronization signal block indicated by the PDCCH order information. The first network device feeds back a timing advance (Timing Advance, TA) to the terminal device.

Alternatively, the first network device sends first downlink control information (i.e., PDCCH order information) to the terminal device, where the PDCCH order information is carried by downlink control information (DCI format 1_0, and the PDCCH order information is used to indicate the terminal device to send a message of a random access procedure to the first network device. The terminal device then sends the message of the random access procedure (e.g., Msg1) to the first network device based on a spatial filter, where the spatial filter is a spatial filter for receiving the PDCCH order information. The first network device feeds back a TA to the terminal device.

For example, the first network device is TPR1, and the second network device is TPR2. The TPR2 sends PDCCH order information to the terminal device, where the PDCCH order information is carried by downlink control information (DCI format 1_0), and the PDCCH order information is used to indicate the terminal device to send a message of a random access procedure to the TPR1. The terminal device then sends the message of the random access procedure (e.g., Msg1) to the TPR1 based on a spatial filter, where the spatial filter is a spatial filter for receiving a synchronization signal block indicated by the PDCCH order information. The TPR1 feeds back a TA to the terminal device.

Alternatively, the TPR1 sends first downlink control information (i.e., PDCCH order information) to the terminal device, where the PDCCH order information is carried by downlink control information (DCI format 1_0), and the PDCCH order information is used to indicate the terminal device to send a message of a random access procedure to the TPR1. The terminal device then sends the message of the random access procedure (e.g., Msg1) to the TPR1 based on a spatial filter, where the spatial filter is a spatial filter for receiving PDCCH order information (PDCCH order DM RS). The TPR1 feeds back a TA to the terminal device.

The above process is for a multi-DCI based multi-TRP (multi-DCI based multi-TRP) scenario, where there are uplink and downlink communications between the terminal device and each network device, so that the terminal device can send the message of the random access procedure to the network device, and then the network device feeds back a TA to the terminal device.

However, during communication between a terminal device and a network device, a situation often arises where there is no downlink communication link between the terminal device and the network device (i.e., a UL-only TRP scenario).

For the UL-only TRP scenario (S-DCI based multi-TRP transmission), the network device cannot send downlink information to the terminal device. Accordingly, the network device cannot inform the terminal device of a spatial filter to be used for signaling feedback during a random access procedure, which causes the terminal device to be unable to send signaling during the random access procedure to the network device, and thus the terminal device cannot acquire a TA.

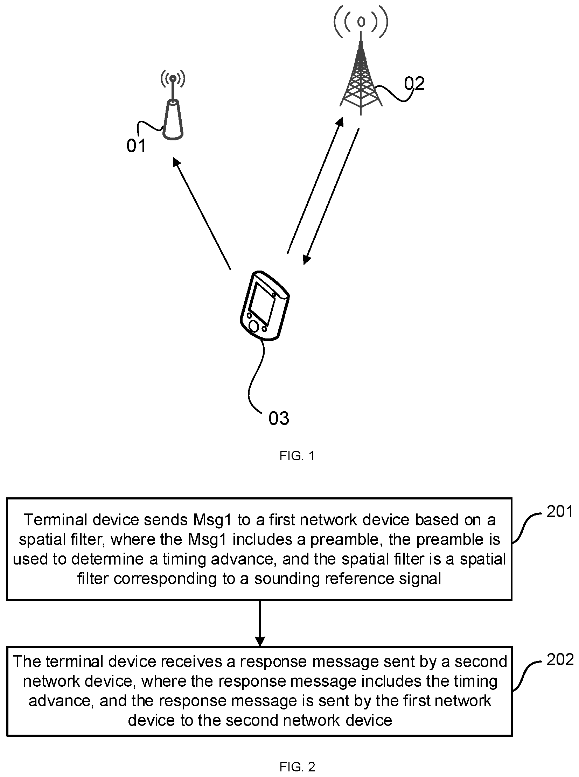

FIG. 1 is a scenario diagram provided by the present disclosure. As shown in FIG. 1, for a UL-only TRP scenario (S-DCI based multi-TRP transmission), there is no downlink communication link between a certain network device and a terminal device. FIG. 1 shows a first network device 01, a second network device 02, and a terminal device 03. There are an uplink communication link and a downlink communication link between the second network device 02 and the terminal device 03; however, there is only an uplink communication link and no downlink communication link between the first network device 01 and the terminal device 03. When it is necessary to acquire a TA determined by the first network device 01, since there is only the uplink communication link between the first network device 01 and the terminal device 03, the first network device 01 cannot send a downlink signal to the terminal device 03, and thus the first network device 01 cannot send PDCCH order information to the terminal device 03. As a result, the terminal device cannot send a message in a random access procedure to the first network device 01 through a spatial filter for receiving the SSB indicated by the PDCCH order information, or the terminal device cannot send a message in a random access procedure to the first network device 01 through a spatial filter indicated by the PDCCH order information sent by the first network device 01.

Therefore, for the UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA.

In addition, for the UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA.

FIG. 2 is a schematic flowchart of a method for acquiring a timing advance provided by an embodiment of the present disclosure. As shown in FIG. 2, the embodiment of the present disclosure provides a method for acquiring a timing advance, which can be applied to a terminal device in the aforementioned 5G system architecture. Through the method, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA; furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA. The method provided by the embodiment includes the following steps:
Step 201: a terminal device sends Msg1 to a first network device based on a spatial filter, where the Msg1 includes a preamble, the preamble is used to determine a timing advance, and the spatial filter is a spatial filter corresponding to a sounding reference signal.

In this step, there are an uplink communication link and a downlink communication link between the terminal device and the second network device, while there is only an uplink communication link and no downlink communication link between the terminal device and the second network device.

The spatial filter (i.e., a beam) used by the terminal device to send the Msg1 to the first network device is the spatial filter corresponding to the sounding reference signal (SRS). Furthermore, the terminal device may send the Msg1 to the first network device using the spatial filter corresponding to the SRS, where the Msg1 includes the preamble. That is, the terminal device may complete sending the Msg1 in the PRACH procedure using the spatial filter corresponding to the SRS.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In the embodiment, the spatial filter used by the terminal device to send the Msg1 to the first network device may be the spatial filter corresponding to the sounding reference signal (SRS) associated with the Msg1. Alternatively, the spatial filter used by the terminal device to send the Msg1 to the first network device may be the fixed spatial filter; for example, the spatial filter used by the terminal device to send the Msg1 to the first network device is the spatial filter corresponding to a synchronization signal block with optimal reference signal received power (RSRP) during reception of the synchronization signal block (SSB). Alternatively, the spatial filter used by the terminal device to send the Msg1 to the first network device may be any spatial filter in a preset spatial filter combination, where the preset spatial filter combination includes multiple spatial filters; for example, the spatial filter used by the terminal device to send the Msg1 to the first network device is a spatial filter in a preset group of spatial filters.

Therefore, multiple selection manners of spatial filters are provided. The spatial filter used by the terminal device to send the Msg1 to the first network device may be a spatial filter corresponding to a sounding reference signal (SRS) associated with the Msg1, or a fixed spatial filter, or a spatial filter in a preset group of spatial filters. This facilitates the terminal device to send the Msg1 or the SRS in the random access procedure to the first network device based on the spatial filter.

In the embodiment, priority may be given to using the spatial filter corresponding to the sounding reference signal (SRS) associated with the Msg1.

In some embodiments, the spatial filter corresponding to the sounding reference signal (SRS) is: a spatial filter corresponding to transmission indication state information related to the sounding reference signal.

In some embodiments, the transmission indication state information related to the sounding reference signal (SRS) includes any one of the following: uplink transmission indication state information (UL TCI state), joint transmission indication state information (joint TCI state), unified transmission indication state information (unified TCI state), and the like.

In some embodiments, when the spatial filter is the spatial filter corresponding to the transmission indication state information related to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In the embodiment, the spatial filter used may be the spatial filter used for sending the sounding reference signal (SRS) contained in the uplink transmission indication state information (UL TCI state). In this case, there is no downlink communication link between the first network device and the terminal device, and the first network device cannot send a downlink signal to the terminal device.

Or, the spatial filter used may be the spatial filter used for receiving the synchronization signal block (SSB) contained in the uplink transmission indication state information (UL TCI state). In this case, there may be a downlink communication link between the first network device and the terminal device, and the first network device may send a downlink signal to the terminal device.

Or, the spatial filter used may be the spatial filter used for receiving the synchronization signal block (SSB) contained in the joint transmission indication state information (joint TCI state). In this case, there may be a downlink communication link between the first network device and the terminal device, and the first network device may send a downlink signal to the terminal device.

Or, for a scenario where the SRS does not follow the unified transmission indication state information (SRS does not follow unified TCI state) but SRS-TCI-State-r17 is configured, the spatial filter used may be the spatial filter indicated by the transmission indication state information for the sounding reference signal (srs-TCI-State-r17).

Or, the spatial filter used may be the spatial filter indicated by the uplink transmission indication state information (UL TCI state) corresponding to the sounding reference signal with the minimum identifier in the sounding reference signal set (SRS resource set); and the sounding reference signal set (SRS resource set) includes multiple sounding reference signals.

Or, the spatial filter used may be a predefined spatial filter. For example, for a scenario where the SRS does not follow the unified transmission indication state information (SRS does not follow unified TCI state) and no SRS-TCI-State-r17 is configured for this SRS, the terminal device uses a spatial filter corresponding to a predefined SRS.

The statement "the spatial filter used may be a predefined spatial filter" may include the following cases:
the spatial filter used may be a spatial filter indicated by transmission indication state information (TCI state) with a minimum identifier in a state information pool, where the state information pool is a joint transmission indication state information pool (joint TCI state pool). The joint transmission indication state information pool (joint TCI state pool) is preconfigured for the terminal device; or the joint transmission indication state information pool (joint TCI state pool) is activated through a MAC CE message. Each TCI state in the state information pool has a unique identifier (Identifier, ID), which is usually an integer and arranged in a certain order. For example, if identifiers of the TCI states in the state information pool are {0, 1, 2, 3}, the TCI state with the minimum identifier is the TCI state corresponding to ID 0. In some embodiments, the TCI state with the minimum identifier may be a default or initial state of the TCL.

Or, the spatial filter used may be a spatial filter indicated by transmission indication state information (TCI state) with a minimum identifier in a state information pool, where the state information pool is an uplink transmission indication state information pool (UL TCI state pool). The uplink transmission indication state information pool (UL TCI state pool) is preconfigured for the terminal device; or the uplink transmission indication state information pool (UL TCI state pool) is activated through a MAC CE message.

Or, the spatial filter used may be a spatial filter indicated by latest unified transmission indication state information (unified TCI state) sent by the second network device.

Or, the spatial filter used may be a spatial filter indicated by latest uplink transmission indication state information (UL TCI state) sent by the second network device.

In the embodiment, any one of the above spatial filters may be used.

In addition, the spatial filter used may also be a spatial filter indicated by transmission indication state information (TCI state) corresponding to a sounding reference signal with a minimum identifier in a sounding reference signal set (SRS resource set).

Therefore, in the embodiment, multiple selection manners of spatial filters are provided, facilitating the terminal device to send a message in the random access procedure to the first network device based on the spatial filter, so that the terminal device can acquire the TA.

In some embodiments, before the step 201, the method further includes the following step: the terminal device receives first indication information sent by the second network device, where the first indication information is used to indicate the sounding reference signal associated with the Msg1.

In an example, the implementation of "the terminal device receives first indication information sent by the second network device" is as follows:
the terminal device receives first downlink control information sent by the second network device; where the first downlink control information includes the first indication information;
or the terminal device receives a first radio resource control message sent by the second network device; where the first radio resource control message includes the first indication information;
or the terminal device receives a first media access control message sent by the second network device; where the first media access control message includes the first indication information.

In the embodiment, there are an uplink communication link and a downlink communication link between the terminal device and the second network device, but there is only an uplink communication link and no downlink communication link between the terminal device and the second network device.

In the above Step S201, the spatial filter (i.e., a beam) used by the terminal device to send the Msg1 to the first network device is the spatial filter corresponding to the sounding reference signal (SRS). Furthermore, the terminal device may send the Msg1 to the first network device using the spatial filter corresponding to the SRS, where the Msg1 includes the preamble. That is, the terminal device may complete sending the Msg1 in the PRACH procedure using the spatial filter corresponding to the SRS.

It can be seen that since the spatial filter (i.e., a beam) used by the terminal device to send the Msg1 to the first network device is the spatial filter corresponding to the sounding reference signal (SRS), the terminal device needs to acquire and learn the SRS associated with the Msg1.

Therefore, the second network device needs to send the first indication information to the terminal device, where the first indication information is used to indicate the SRS associated with the Msg1. Then the terminal device can determine, according to the first indication information, the SRS associated with the Msg1, and further determine that a spatial filter (i.e., a beam) used to send the Msg1 to the first network device is a spatial filter corresponding to the sounding reference signal (SRS).

The first indication information may be carried by the following messages: first downlink control information (PDCCH order information), a first radio resource control (RRC) message, a first media access control (MAC CE) message. Then the second network device can notify the terminal device of the first indication information in multiple manners, so that the terminal device can determine the SRS associated with the Msg1, and further determine that a spatial filter (i.e., a beam) used to send the Msg1 to the first network device is a spatial filter corresponding to the sounding reference signal (SRS).

It can be seen that the second network device needs to send the first downlink control information (i.e., PDCCH order information) to the terminal device, where the PDCCH order information includes the first indication information. Or, the second network device needs to send the first radio resource control message to the terminal device, where the first radio resource control message includes the first indication information. Or, the second network device needs to send the first media access control message to the terminal device, where the first media access control message includes the first indication information.

In one mode, since the spatial filter (i.e., a beam) used by the terminal device to send the Msg1 to the first network device is the spatial filter corresponding to the sounding reference signal (SRS), the terminal device needs to acquire and learn the SRS associated with the Msg1; furthermore, an association between the SRS and the Msg1 needs to be established, and the association relationship may be indicated to the terminal device by the second network device.

For example, the second network device sends the first downlink control information (i.e., PDCCH order information) to the terminal device, where the PDCCH order information has first indication information which is an SRS ID indicator. The first indication information indicates the SRS. Furthermore, after receiving the PDCCH order information sent by the second network device, the terminal device sends the Msg1 to the first network device according to the spatial filter of the SRS indicated by the first indication information (SRS ID indicator) in the PDCCH order information.

In another mode, since the spatial filter (i.e., a beam) used by the terminal device to send the Msg1 to the first network device is the spatial filter corresponding to the sounding reference signal (SRS), the terminal device needs to acquire and learn the SRS associated with the Msg1; furthermore, the second network device needs to indicate to the terminal device which spatial filter of the SRS to be used.

For example, the second network device sends a first RRC message to the terminal device, where the first RRC message has first indication information, and the first indication information indicates the SRS associated with the Msg1. Furthermore, after receiving the first RRC message sent by the second network device, the terminal device sends the Msg1 to the first network device according to the spatial filter of the SRS indicated by the first indication information in the first RRC message.

Or, the second network device sends a first MAC CE message to the terminal device, where the first MAC CE message has first indication information, and the first indication information indicates the SRS associated with the Msg1. Furthermore, after receiving the first MAC CE message sent by the second network device, the terminal device sends the Msg1 to the first network device according to the spatial filter of the SRS indicated by the first indication information in the first MAC CE message.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point.

The path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In some embodiments, before the step 201, the method further includes the following step: the terminal device receives fifth indication information sent by the second network device; where the fifth indication information is used to indicate the path loss power of the uplink-only reception point, or the fifth indication information is used to indicate the uplink received signal power difference.

In an example, the implementation of "receiving fifth indication information sent by the second network device" is as follows:
receiving second downlink control information sent by the second network device; where the second downlink control information includes the fifth indication information;
or receiving higher-layer signaling sent by the second network device; where the higher-layer signaling includes the fifth indication information.

In the embodiment, when the terminal device sends the Msg1 to the first network device, it also needs to determine the transmission power for sending the Msg1. Furthermore, the terminal device sends the Msg1 to the first network device according to the transmission power and the spatial filter for sending the Msg1.

The transmission power for sending the Msg1 is a minimum value of the following powers: a maximum transmission power of a terminal device and a second preset power; where the second preset power is a sum of target received power of the Msg1 and path loss power of an uplink-only reception point. The path loss power of the uplink-only reception point is a difference between received power configured for the sounding reference signal and a transmission power configured for the sounding reference signal. The path loss power of the uplink-only reception point needs to be indicated to the terminal device by the second network device.

For example, the transmission power for sending the Msg1 is P_{PRACH,b,f,c} = min {P_{CMAX,f,c}(i), P_{PRACH,target,f,c} + PL_{b,f,c,uplink}}. Where P_{CMAX,f,c}(i) is the maximum transmission power of the terminal device. P_{PRACH,target,f,c} is the target received power of the Msg1. PL_{b,f,c,uplink} is the path loss power of the uplink-only reception point (uplink-only-TRP). PL_{b,f,c,uplink} may be determined through an uplink reference signal (e.g., SRS). b represents bandwidth; f represents frequency band; and c represents CC. i represents the i-th transmission occasion.

The path loss power of the uplink-only reception point PL_{b,f,c,uplink} = SRS-RSRP - SRS_configured_power. Where SRS_configured_power is the transmission power configured for the sounding reference signal (SRS). SRS-RSRP is the received power configured for the sounding reference signal (SRS), i.e., SRS-RSRP is the received power of the SRS when the transmission power of the SRS is SRS_configured_power. After the path loss power of the uplink-only reception point PL_{b,f,c,uplink} is calculated by the second network device, and the second network device indicates the path loss power of the uplink-only reception point to the terminal device.

Or, the transmission power for sending the Msg1 is a minimum value of the following powers: a maximum transmission power of a terminal device and a second preset power; where the second preset power is a sum of target received power of the Msg1 and path loss power of an uplink-only reception point. The path loss power of the uplink-only reception point is a sum of downlink path loss power of the first network device and an uplink received signal power difference, where the uplink received signal power difference is the difference between uplink received signal power of the first network device and an uplink received signal power of the second network device. The uplink received signal power difference needs to be indicated to the terminal device by the second network device.

For example, the transmission power for sending the Msg1 is P_{PRACH,b,f,c} = min {P_{CMAX,f,c}(i), P_{PRACH,target,f,c} + PL_{b,f,c,uplink}}. Where P_{CMAX,f,c}(i) is the maximum transmission power of the terminal device. P_{PRACH,target,f,c} is the target received power of the Msg1. PL_{b,f,c,uplink} is the path loss power of the uplink-only reception point (uplink-only-TRP), b represents bandwidth; f represents frequency band; c represents CC.; and i represents the i-th transmission occasion.

The path loss power of the uplink-only reception point is PL_{b,f,c,uplink} = PL₁ + delta_{uplink_pathloss}. Where PL₁ is the downlink path loss power of the second network device estimated by the terminal device. delta_{uplink_pathloss} is the uplink received signal power difference, which is the difference between the uplink received signal power of the first network device and the uplink received signal power of the second network device, e.g., the uplink received signal power of the first network device minus the uplink received signal power of the second network device, or the uplink received signal power of the second network device minus the uplink received signal power of the first network device. If delta_{uplink_pathloss} is 0, it means the terminal device directly uses the downlink path loss power of the second network device as the downlink path loss power of the first network device. After the uplink received signal power difference delta_{uplink_pathloss} is calculated by the second network device, the second network device indicates the path loss power of the uplink-only reception point to the terminal device.

Or, the transmission power for sending the Msg1 is a minimum value of the following powers: a maximum transmission power of a terminal device and a second preset power; where the second preset power is a sum of target received power of the Msg1 and path loss power of an uplink-only reception point. The path loss power of the uplink-only reception point is a sum of the downlink path loss power of the second network device and path loss offset power between the first network device and the second network device.

For example, the transmission power for sending the Msg1 is P_{PRACH,b,f,c} = min {P_{CMAX,f,c}(i), P_{PRACH,target,f,c} + PL_{b,f,c,uplink}}. Where P_{CMAX,f,c}(i) is the maximum transmission power of the terminal device. P_{PRACH,target,f,c} is the target received power of the Msg1. PL_{b,f,c,uplink} is the path loss power of the uplink-only reception point (uplink-only-TRP). b represents bandwidth; f represents frequency band; c represents CC; and i represents the i-th transmission occasion.

The path loss power of the uplink-only reception point is PL_{b,f,c,uplink} = PL₁ + PL_{offset}. Where PL₁ is the downlink path loss power of the second network device estimated by the terminal device. PL_{offset} is the path loss offset power between the first network device and the second network device.

In an example, the path loss offset power may be indicated to the terminal device by at least one of the first network device or the second network device. The first network device or the second network device may send the path loss offset power between the first network device and the second network device to the terminal device through a radio resource control (RRC) message.

In another example, the path loss offset power between the first network device and the second network device may be indicated through the state information pool, where the state information pool is the joint transmission indication state information pool (joint TCI state pool) or the uplink transmission indication state information pool (UL TCI state pool). The state information pool is preconfigured for the terminal device; or the state information pool is activated through the MAC CE message.

Therefore, the terminal device can determine transmission power of the Msg1 according to the above parameters. Then the terminal device sends the Msg1 to the first network device according to the transmission power for sending the Msg1 and the spatial filter.

It can be seen that the second network device needs to send the path loss power of the uplink-only reception point or the uplink received signal power difference to the terminal device in advance. The second network device may send the fifth indication information to the terminal device; where the fifth indication information is used to indicate the path loss power of the uplink-only reception point, or the fifth indication information is used to indicate the uplink received signal power difference. Thereby, the terminal device determines transmission power of the Msg1 based on the path loss power of the uplink-only reception point, so as to send the Msg1 to the first network device. Alternatively, the terminal device determines transmission power of the Msg1 based on the uplink received signal power difference, so as to send the Msg1 to the first network device.

The fifth indication information may be a separate piece of signaling, or the fifth indication information is carried by the higher-layer signaling, or the fifth indication information is carried by the downlink control information.

Therefore, the second network device sends the second downlink control information to the terminal device; where the second downlink control information includes the fifth indication information. Or, the second network device sends the higher-layer signaling to the terminal device; where the higher-layer signaling includes the fifth indication information, e.g., an RRC message.

Therefore, multiple indication manners for indicating the path loss power of the uplink-only reception point or the uplink received signal power difference are provided. The fifth indication information may be a separate piece of signaling, or the fifth indication information is carried by the higher-layer signaling, or the fifth indication information is carried by the downlink control information. This facilitates the terminal device to determine the transmission power of the Msg1 based on the path loss power of the uplink-only reception point or the uplink received signal power difference, so as to send the Msg1 to the first network device.

Step 202: the terminal device receives a response message sent by a second network device, where the response message includes the timing advance, and the response message is sent by the first network device to the second network device.

In the embodiment, after the first network device receives the Msg1 sent by the terminal device, the first network device determines the TA according to the preamble in the Msg1. Then, the first network device sends the response message to the second network device, where the response message includes the TA. The second network device sends the response message carrying the TA to the terminal device.

Then the terminal device acquires the TA.

In the embodiment, the terminal device sends the Msg1 to the first network device based on the spatial filter, where the Msg1 includes the preamble; the spatial filter is the spatial filter corresponding to the sounding reference signal. Furthermore, the spatial filter (i.e., a beam) used by the terminal device to send the Msg1 to the first network device is the spatial filter corresponding to the sounding reference signal (SRS). For the UL-only TRP scenario (S-DCI based multi-TRP transmission), when there is no downlink communication link between the network device and the terminal device, the spatial filter used for sending the Msg1 in the random access procedure to the network device can be determined during the process of acquiring the TA, so that the terminal device can send the Msg1 in the random access procedure to the network device. Then, the first network device feeds back the response message carrying the TA to the terminal device through the second network device. Therefore, the terminal device can acquire the TA. In addition, for the UL-only TRP scenario (S-DCI based multi-TRP transmission), when there is no downlink communication link between the network device and the terminal device, during the process of acquiring the TA, the spatial filter used for sending the Msg1 in the random access procedure to the network device and the transmission power used for sending the message in the random access procedure to the network device are determined, so that the terminal device can send the Msg1 in the random access procedure to the network device and the acquire the TA.

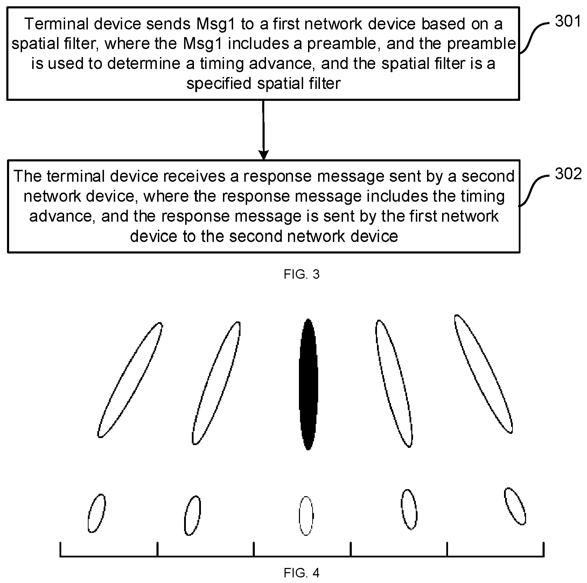

FIG. 3 is a schematic flowchart of a method for acquiring a timing advance provided by an embodiment of the present disclosure. As shown in FIG. 3, the embodiment of the present disclosure provides the method for acquiring the timing advance, which can be applied to a terminal device in the aforementioned 5G system architecture. Through the method, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA; furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA. The method provided by the embodiment includes the following steps.

Step 301: a terminal device sends Msg1 to a first network device based on a spatial filter, where the Msg1 includes a preamble, and the preamble is used to determine a timing advance, and the spatial filter is a specified spatial filter.

In this step, there are an uplink communication link and a downlink communication link between the terminal device and the second network device, while there is only an uplink communication link and no downlink communication link between the terminal device and the second network device.

The spatial filter (i.e., a beam) used by the terminal device to send the Msg1 to the first network device is the specified spatial filter. Then the terminal device may send the Msg1 to the first network device using the specified spatial filter, where the Msg1 includes the preamble. That is, the terminal device may complete sending the Msg1 in the PRACH procedure using the specified spatial filter.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In the embodiment, the spatial filter used by the terminal device to send the Msg1 to the first network device may be the spatial filter corresponding to the sounding reference signal (SRS) associated with the Msg1. Alternatively, the spatial filter used by the terminal device to send the Msg1 to the first network device may be the fixed spatial filter; for example, the spatial filter used by the terminal device to send the Msg1 to the first network device is the spatial filter corresponding to a synchronization signal block with optimal reference signal received power (RSRP) during reception of the synchronization signal block (SSB). Alternatively, the spatial filter used by the terminal device to send the Msg1 to the first network device may be any spatial filter in a preset spatial filter combination, where the preset spatial filter combination includes multiple spatial filters; for example, the spatial filter used by the terminal device to send the Msg1 to the first network device is a spatial filter in a preset group of spatial filters.

Therefore, multiple selection manners of spatial filters are provided. The spatial filter used by the terminal device to send the Msg1 to the first network device may be a spatial filter corresponding to a sounding reference signal (SRS) associated with the Msg1, or a fixed spatial filter, or a spatial filter in a preset group of spatial filters. This facilitates the terminal device to send the Msg1 or the SRS in the random access procedure to the first network device based on the spatial filter.

In the embodiment, priority may be given to using the specified spatial filter.

The embodiment is directed to a scenario of RACH-based TA acquisition.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In the embodiment, reference may be made to the description of the embodiment shown in FIG. 2 for the spatial filter.

In some embodiments, before step 301, the following step is further contained: the terminal device receives second indication information sent by the second network device, where the second indication information is used to indicate the number of transmission repetitions of the Msg1.

In an example, the implementation of "the terminal device receives second indication information sent by the second network device" is as follows:
the terminal device receives a second radio resource control message sent by the second network device; where the second radio resource control message includes the second indication information;
or the terminal device receives a second media access control message sent by the second network device; where the second media access control message includes the second indication information.

In the embodiment, there are an uplink communication link and a downlink communication link between the terminal device and the second network device, while there is only an uplink communication link and no downlink communication link between the terminal device and the second network device.

In the above Step S201, the spatial filter (i.e., a beam) used by the terminal device to send the Msg1 to the first network device is the specified spatial filter. Then the terminal device may send the Msg1 to the first network device using the specified spatial filter, where the Msg1 includes the preamble. That is, the terminal device may complete sending the Msg1 in the PRACH procedure using the specified spatial filter.

A transmission direction of the specified spatial filter is determined by the terminal device itself. The specified spatial filter may be the spatial filter corresponding to the synchronization signal block with optimal reference signal received power (RSRP) during reception of the synchronization signal block (SSB). The terminal device sends the Msg1 to the first network device using the fixed spatial filter (for example, the spatial filter corresponding to the synchronization signal block with optimal reference signal received power).

The embodiment is directed to a scenario of RACH-based TA acquisition.

FIG. 4 is schematic diagram I of a spatial filter provided by the present disclosure. As shown in FIG. 4, the terminal device sends the Msg1 to the first network device using the fixed spatial filter (for example, the spatial filter corresponding to the synchronization signal block with optimal reference signal received power). The fixed spatial filter is shown as a black beam in FIG. 4.

In addition, the second network device needs to indicate the number of transmission repetitions of the Msg1. The second network device sends the second indication information to the terminal device, where the second indication information is used to indicate the number of transmission repetitions (repetition) of the Msg1. Then the terminal device sends the Msg1 to the first network device by using the fixed spatial filter based on the number of transmission repetitions (repetition) indicated by the second indication information.

The second indication information may be carried by the following messages: a second radio resource control (RRC) message, a second media access control (MAC CE) message. Then the second network device can notify the terminal device of the second indication information in multiple manners, so that the terminal device sends the Msg1 to the first network device by using the fixed spatial filter based on the number of transmission repetitions (repetition) indicated by the second indication information.

For example, the second network device needs to send a second radio resource control message to the terminal device; where the second radio resource control message includes the second indication information. Or, the second network device needs to send a second media access control message to the terminal device; where the second media access control message includes the second indication information.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point.

For example, the path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device; or the path loss power of the uplink-only reception point is a sum of downlink path loss power of the first network device and path loss offset power between the first network device and the second network device.

In some embodiments, before the step 201, the method further includes the following step: the terminal device receives fifth indication information sent by the second network device; where the fifth indication information is used to indicate the path loss power of the uplink-only reception point, or the fifth indication information is used to indicate the uplink received signal power difference.

In an example, the implementation of "the terminal device receives fifth indication information sent by the second network device" is as follows:
the terminal device receives second downlink control information sent by the second network device; where the second downlink control information includes the fifth indication information;
or the terminal device receives higher-layer signaling sent by the second network device; where the higher-layer signaling includes the fifth indication information.

In the embodiment, reference may be made to the description of the embodiment shown in FIG. 2 for the transmission power for sending the Msg1Msg1.

Step 302: the terminal device receives a response message sent by a second network device, where the response message includes the timing advance, and the response message is sent by the first network device to the second network device.

In the embodiment, the first network device receives the Msg1 sent by the terminal device based on different spatial filters. And the first network device then determines the TA according to the preamble in the Msg1. Then, the first network device sends the response message to the second network device, where the response message includes the TA. The second network device sends the response message carrying the TA to the terminal device.

Then the terminal device acquires the TA.

In the embodiment, the terminal device sends the Msg1 to the first network device based on the spatial filter, where the Msg1 includes the preamble, and the spatial filter is the specified filter. Furthermore, the spatial filter (i.e., a beam) used by the terminal device to send the Msg1 to the first network device is a fixed filter. For the UL-only TRP scenario (S-DCI based multi-TRP transmission), when there is no downlink communication link between the network device and the terminal device, the spatial filter used for sending the Msg1 in the random access procedure to the network device can be determined during the process of acquiring the TA, so that the terminal device can send the Msg1 in the random access procedure to the network device. Then, the first network device feeds back the response message carrying the TA to the terminal device through the second network device. Therefore, the terminal device can acquire the TA. In addition, for the UL-only TRP scenario (S-DCI based multi-TRP transmission), when there is no downlink communication link between the network device and the terminal device, during the process of acquiring the TA, the spatial filter used for sending the Msg1 in the random access procedure to the network device and the transmission power used for sending the message in the random access procedure to the network device are determined, so that the terminal device can send the Msg1 in the random access procedure to the network device and the terminal device can acquire the TA.

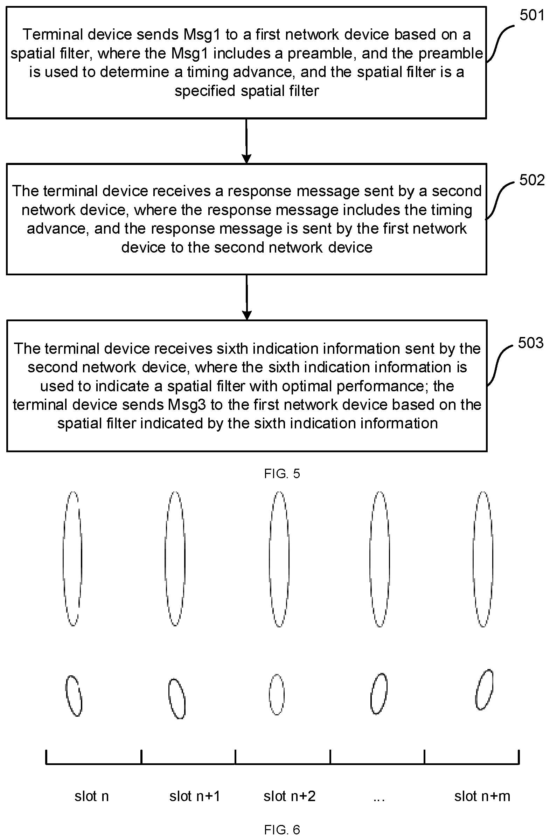

FIG. 5 is a schematic flowchart of a method for acquiring a timing advance provided by an embodiment of the present disclosure. As shown in FIG. 5, the embodiment of the present disclosure provides the method for acquiring the timing advance, which can be applied to a terminal device in the aforementioned 5G system architecture. Through the method, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA; furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA. The method provided by the embodiment includes the following steps.

Step 501: a terminal device sends Msg1 to a first network device based on a spatial filter, where the Msg1 includes a preamble, and the preamble is used to determine a timing advance, and the spatial filter is a specified spatial filter.

In this step, there are an uplink communication link and a downlink communication link between the terminal device and the second network device, while there is only an uplink communication link and no downlink communication link between the terminal device and the second network device.

The spatial filter (i.e., a beam) used by the terminal device to send the Msg1 to the first network device is the specified spatial filter. In the embodiment, the spatial filter used by the terminal device to send the Msg1 to the first network device is any spatial filter in the preset spatial filter combination, where the preset spatial filter combination includes multiple spatial filters; for example, the spatial filter used by the terminal device to send the Msg1 to the first network device is a spatial filter in a preset group of spatial filters.

The terminal device can thus send the Msg1 to the first network device using the spatial filter in the preset spatial filter combination, where the Msg1 includes the preamble. That is, the terminal device may complete sending the Msg1 in the PRACH procedure using the specified spatial filter.

The embodiment is directed to a scenario of RACH-based TA acquisition.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In the embodiment, the spatial filter used by the terminal device to send the Msg1 to the first network device may be the spatial filter corresponding to the sounding reference signal (SRS) associated with the Msg1. Alternatively, the spatial filter used by the terminal device to send the Msg1 to the first network device may be the fixed spatial filter; for example, the spatial filter used by the terminal device to send the Msg1 to the first network device is the spatial filter corresponding to a synchronization signal block with optimal reference signal received power (RSRP) during reception of the synchronization signal block (SSB). Alternatively, the spatial filter used by the terminal device to send the Msg1 to the first network device may be any spatial filter in a preset spatial filter combination, where the preset spatial filter combination includes multiple spatial filters; for example, the spatial filter used by the terminal device to send the Msg1 to the first network device is a spatial filter in a preset group of spatial filters.

Therefore, multiple selection manners of spatial filters are provided. The spatial filter used by the terminal device to send the Msg1 to the first network device may be a spatial filter corresponding to a sounding reference signal (SRS) associated with the Msg1, or a fixed spatial filter, or a spatial filter in a preset group of spatial filters. This facilitates the terminal device to send the Msg1 or the SRS in the random access procedure to the first network device based on the spatial filter.

In the embodiment, reference may be made to the embodiment shown in FIG. 2 for the transmission power of the Msg1. In the embodiment, priority may be given to using the preset spatial filter combination including multiple spatial filters. Thus, the first network device sends the Msg1 in the random access procedure to the first network device based on each spatial filter in the group of spatial filters.

FIG. 6 is schematic diagram II of a spatial filter provided by the present disclosure. As shown in FIG. 6, the terminal device sends the Msg1 in the random access procedure to the first network device by using each spatial filter in the group of spatial filters. As shown in FIG. 6, each spatial filter in the above group of spatial filters is sent on a time slot slot n, a time slot slot n+1, a time slot slot n+2, ..., a time slot slot n+m; where both n and m are positive integers greater than or equal to 1.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In the embodiment, reference may be made to the description of the embodiment shown in FIG. 2 for the spatial filter.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point.

For example, the path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device; or the path loss power of the uplink-only reception point is a sum of downlink path loss power of the first network device and path loss offset power between the first network device and the second network device.

In some embodiments, before the step 501, the method further includes the following step: the terminal device receives fifth indication information sent by the second network device; where the fifth indication information is used to indicate the path loss power of the uplink-only reception point, or the fifth indication information is used to indicate the uplink received signal power difference.

In an example, an implementation of "the terminal device receives fifth indication information sent by the second network device" is as follows:
the terminal device receives second downlink control information sent by the second network device; where the second downlink control information includes the fifth indication information;
or the terminal device receives higher-layer signaling sent by the second network device; where the higher-layer signaling includes the fifth indication information.

In the embodiment, reference may be made to the description of the embodiment shown in FIG. 2 for the transmission power for sending the Msg1.

Step 502: the terminal device receives a response message sent by a second network device, where the response message includes the timing advance, and the response message is sent by the first network device to the second network device.

In the embodiment, the terminal device sends the Msg1 in the random access procedure to the first network device based on each spatial filter in the group of spatial filters.

The first network device receives the Msg1 sent by the terminal device by using a certain spatial filter. The first network device determines the TA according to the preamble in the Msg1. Then, the first network device sends the response message to the second network device, where the response message includes the TA. The second network device sends the response message carrying the TA to the terminal device.

Then the terminal device acquires the TA.

Step 503: the terminal device receives sixth indication information sent by the second network device, where the sixth indication information is used to indicate a spatial filter with optimal performance; the terminal device sends Msg3 to the first network device based on the spatial filter indicated by the sixth indication information.

In the embodiment, after "the terminal device sends the Msg1 in the random access procedure to the first network device by using each spatial filter in the group of spatial filters, and the first network device receives the Msg1 sent by the terminal device by using a certain spatial filter", the first network device determines the spatial filter with optimal performance from the above group of spatial filters. Then, the first network device sends the sixth indication information to the terminal device via the second network device, where the sixth indication information is used to indicate the spatial filter with optimal performance. For example, the first network device sends an RAR MAC PDU message via the second network device, where the RAR MAC PDU message includes the sixth indication information.

Therefore, the terminal device sends the Msg3 to the first network device based on the spatial filter indicated by the sixth indication information.

In this way, the first network device sends the sixth indication information to the terminal device via the second network device; where the sixth indication information is used to indicate the spatial filter with optimal performance. This facilitates the terminal device to directly determine the spatial filter with optimal performance, and the terminal device sends the Msg3 in the random access procedure to the first network device based on the spatial filter with optimal performance.

In the embodiment, the terminal device sends the Msg1 to the first network device based on the spatial filter, where the Msg1 includes the preamble; the spatial filter is a spatial filter in the group of spatial filters. Furthermore, the spatial filter (i.e., a beam) used by the terminal device to send the Msg1 to the first network device is a spatial filter in the group of spatial filters. For the UL-only TRP scenario (S-DCI based multi-TRP transmission), when there is no downlink communication link between the network device and the terminal device, the spatial filter used for sending the Msg1 in the random access procedure to the network device can be determined during the process of acquiring the TA, so that the terminal device can send the Msg1 in the random access procedure to the network device. Then, the first network device feeds back the response message carrying the TA to the terminal device through the second network device. Therefore, the terminal device can acquire the TA. In addition, for the UL-only TRP scenario (S-DCI based multi-TRP transmission), when there is no downlink communication link between the network device and the terminal device, during the process of acquiring the TA, the spatial filter used for sending the Msg1 in the random access procedure to the network device and the transmission power used for sending the message in the random access procedure to the network device are determined, so that the terminal device can send the Msg1 in the random access procedure to the network device and the terminal device can acquire the TA.

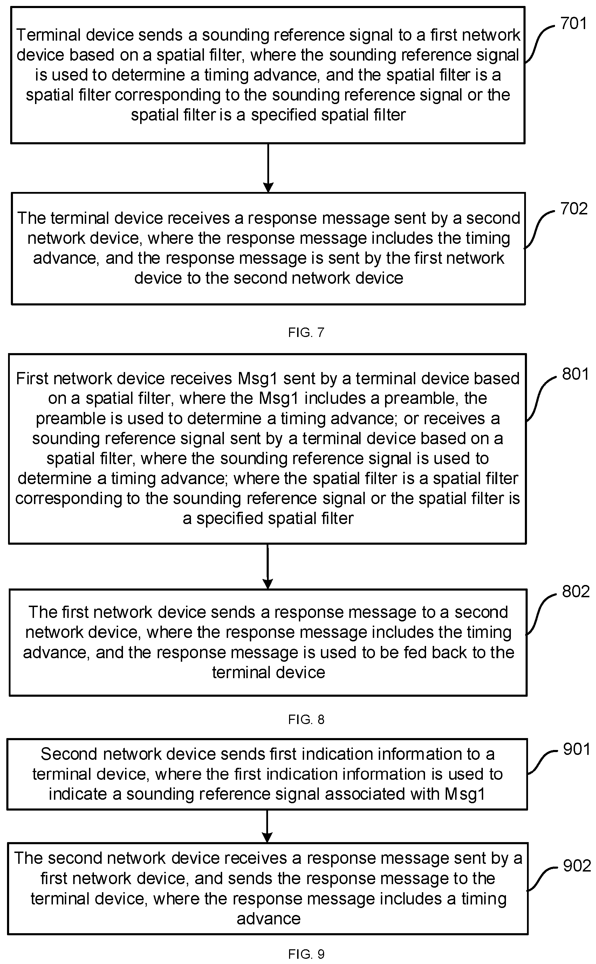

FIG. 7 is a schematic flowchart of a method for acquiring a timing advance provided by an embodiment of the present disclosure. As shown in FIG. 7, the embodiment of the present disclosure provides the method for acquiring the timing advance, which may be applied to the terminal device in the aforementioned 5G system architecture. Through the method, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA; furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA. The method provided by the embodiment includes the following steps.

Step 701: a terminal device sends a sounding reference signal to a first network device based on a spatial filter, where the sounding reference signal is used to determine a timing advance, and the spatial filter is a spatial filter corresponding to the sounding reference signal or the spatial filter is a specified spatial filter.

In this step, there are an uplink communication link and a downlink communication link between the terminal device and the second network device, while there is only an uplink communication link and no downlink communication link between the terminal device and the second network device.

The spatial filter (i.e., a beam) used by the terminal device to send the sounding reference signal (SRS) to the first network device is the spatial filter corresponding to the sounding reference signal (SRS). Furthermore, the terminal device may send the SRS to the first network device by using the spatial filter corresponding to the SRS, where the SRS includes the preamble. That is, the terminal device may complete sending the SRS in the PRACH procedure by using the spatial filter corresponding to the SRS.

Alternatively, the spatial filter (i.e., a beam) used by the terminal device to send the sounding reference signal (SRS) to the first network device is the specified spatial filter. For example, the specified spatial filter is a fixed spatial filter, or a spatial filter in a group of spatial filters. Furthermore, the terminal device may send the SRS to the first network device by using the specified spatial filter, where the SRS includes the preamble. That is, the terminal device may complete sending the SRS in the PRACH procedure by using the specified spatial filter.

The embodiment is directed to a scenario of RACH-less based TA acquisition.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In the embodiment, the spatial filter used by the terminal device to send the SRS to the first network device may be the spatial filter corresponding to the sounding reference signal (SRS) associated with the Msg1. Alternatively, the spatial filter used by the terminal device to send the SRS to the first network device may be a fixed spatial filter; for example, the spatial filter used by the terminal device to send the SRS to the first network device is a spatial filter corresponding to a synchronization signal block (SSB) with optimal reference signal received power (RSRP) when receiving the synchronization signal block (SSB). Alternatively, the spatial filter used by the terminal device to send the SRS to the first network device may be any spatial filter in the preset spatial filter combination, where the preset spatial filter combination includes multiple spatial filters; for example, the spatial filter used by the terminal device to send the SRS to the first network device is a spatial filter in a preset group of spatial filters.

In this way, multiple selection manners of spatial filters are provided. The spatial filter used by the terminal device to send the SRS to the first network device may be the spatial filter corresponding to the sounding reference signal (SRS) associated with the Msg1, or the fixed spatial filter, or the spatial filter in the preset group of spatial filters, thereby facilitating the terminal device to send a message in the random access procedure to the first network device based on the spatial filter.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In the embodiment, reference may be made to the introduction of FIG. 2 for the spatial filter.

In addition, for a scenario where an SRS resource set follows, a spatial filter used may be a spatial filter indicated by a joint transmission indication state information list (dl-OrJointTCI-StateList).

Or, for a scenario where an SRS resource set follows, a spatial filter used may be a spatial filter indicated by transmission indication-uplink-state information (TCI-UL-State).

Or, for a scenario where an SRS resource set does not follow, the spatial filter used may be a spatial filter indicated by transmission indication state information (TCI state) corresponding to a sounding reference signal with a minimum identifier in the sounding reference signal set (SRS resource set); and the sounding reference signal set (SRS resource set) includes multiple sounding reference signals.

Or, for a scenario where an SRS resource set does not follow, the spatial filter used may be a spatial filter indicated by uplink transmission indication state information (UL TCI state) corresponding to a sounding reference signal with a minimum identifier in the sounding reference signal set (SRS resource set); and the sounding reference signal set (SRS resource set) includes multiple sounding reference signals.

In some embodiments, transmission power for sending the sounding reference signal is a minimum value of the following powers: a maximum transmission power of the terminal device and a first preset power; where the first preset power is a sum of a power value and a transmission power difference.

The transmission power difference is a power difference between transmission power of the sounding reference signal sent by the first network device and transmission power of the sounding reference signal sent by the second network device.

The power value represents a sum of the following information: received power of the sounding reference signal, transmission bandwidth of the sounding reference signal, a preset power compensation factor, downlink path loss information, and an adjustment amount of transmission power of a physical uplink shared channel of the terminal device.

In some embodiments, before Step S701, the method further includes: the terminal device receives fourth indication information sent by the second network device, where the fourth indication information is used to indicate the transmission power difference.

An implementation of "the terminal device receives fourth indication information sent by the second network device" is as follows:
the terminal device receives first downlink control information sent by the second network device, where the first downlink control information includes the fourth indication information;
or the terminal device receives a fourth radio resource control message sent by the second network device; where the fourth radio resource control message includes the fourth indication information;
or the terminal device receives a fourth media access control message sent by the second network device; where the fourth media access control message includes the fourth indication information.

In the embodiment, when the terminal device sends the SRS to the first network device, the transmission power for sending the SRS needs to be further determined. Furthermore, the terminal device sends the SRS to the first network device according to the transmission power for sending the SRS and the spatial filter.

The transmission power for sending the sounding reference signal is a minimum value of the following powers: a maximum transmission power of the terminal device and a first preset power; where the first preset power is a sum of a power value and a transmission power difference.

The transmission power difference is a power difference between transmission power of the sounding reference signal sent by the first network device and transmission power of the sounding reference signal sent by the second network device.

The power value represents a sum of the following information: received power of the sounding reference signal, transmission bandwidth of the sounding reference signal, a preset power compensation factor, downlink path loss information, and an adjustment amount of transmission power of a physical uplink shared channel of the terminal device.

For example, the transmission power of the SRS is: $\begin{matrix}{P}_{SRS , f , c} \left(i{, q}_{s},l\right) \\ = min \left\{\begin{matrix}{P}_{CMAX , f , c} \left(i\right) , \\ {P}_{{O - SRS}_{SRS} , b , f , c} \left({q}_{s}\right) + 10 {log}_{10} \left({2}^{u}⋅{M}_{SRS , b , f , c}\left(i\right)\right) + {α}_{SRS , b , f , c} \left({q}_{s}\right) ⋅ {PL}_{b , fc} \left({q}_{d}\right) + {h}_{b , f , c} \left(i, l\right) + delta_power_offset\end{matrix}\right\}\end{matrix}$ where P_{CMAX,f,c}(i) is the maximum transmission power of the terminal device. The power value is P_{O-SRS_{SRS},b,f,c}(qₛ) + 10log₁₀ (2^{u} · M_{SRS,b,f,c}(i)) + α_{SRS,b,f,c}(qₛ) · PL_{b,fc}(q_{d}) + h_{b,f,c}(i,l) . delta_power_offset is the transmission power difference. P_{O-SRS_{SRS},b,f,c}(qₛ) is received power of the sounding reference signal configured by the network device. M_{SRS,b,f,c}(i) is transmission bandwidth of the sounding reference signal. α_{SRS,b,f,c}(qₛ) is a preset power compensation factor. PL_{b,fc}(q_{d}) is downlink path loss information. h_{b,f,c}(i,l) is an adjustment amount of transmission power of a physical uplink shared channel of the terminal device. b represents bandwidth; f represents frequency band; c represents CC; and i represents the i-th transmission occasion.

In this way, the terminal device can determine the transmission power of the SRS according to the above parameters. Then the terminal device sends the SRS to the first network device according to the transmission power for sending the SRS and the spatial filter.

It can be seen that the second network device needs to send the transmission power difference to the terminal device in advance. The second network device may send the fourth indication information to the terminal device; where the fourth indication information is used to indicate the transmission power difference. Therefore, the terminal device determines the transmission power of the SRS based on the transmission power difference, so as to send the SRS to the first network device.

The fourth indication information may be a separate piece of signaling, or the fourth indication information is carried by the higher-layer signaling, or the fourth indication information is carried by downlink control information.

In this way, the second network device sends first downlink control information to the terminal device, where the first downlink control information includes the fourth indication information. Or, the second network device sends a fourth radio resource control message to the terminal device; where the fourth radio resource control message includes the fourth indication information. Or, the second network device sends a fourth media access control message to the terminal device; where the fourth media access control message includes the fourth indication information.

The first downlink control information may be DCI format 0_1.

In this way, multiple indication manners for indicating the transmission power difference are provided. The fourth indication information may be a separate piece of signaling, or the fourth indication information is carried by the higher-layer signaling, or the fourth indication information is carried by downlink control information. This facilitates the terminal device to determine the transmission power of the SRS based on the transmission power difference, so as to send the SRS to the first network device.

In some embodiments, configuration information of the sounding reference signal indicates time-domain resources for sending the sounding reference signal.

Or, before Step S701, the method further includes: the terminal device receives third indication information sent by the second network device, where the third indication information is used to indicate a cell to which the sounding reference signal belongs.

In an example, an implementation of "the terminal device receives the third indication information sent by the second network device" is as follows:
the terminal device receives first downlink control information sent by the second network device; where the first downlink control information includes the third indication information; or the first downlink control information is used to indicate the terminal device to send the sounding reference signal, and the sounding reference signal to be sent to the first network device includes the third indication information;
or the terminal device receives a third radio resource control message sent by the second network device; where the third radio resource control message includes the third indication information;
or the terminal device receives a third media access control message sent by the second network device; where the third media access control message includes the third indication information.

In the embodiment, the configuration information of the sounding reference signal indicates time-domain resources for sending the sounding reference signal. Alternatively, the second network device needs to send the third indication information to the terminal device, where the third indication information is used to indicate the cell to which the sounding reference signal belongs. Then the terminal device can determine time-domain resources of the SRS, or determine a cell to which the SRS belongs.

For example, for a periodic SRS and a semi-persistent SRS, the configuration information of the SRS indicates time-domain resources for sending the sounding reference signal. For example, periodicity (periodicity) and offset (offset) are configured in the configuration information of the SRS, thereby indicating the time-domain resources for sending the SRS.

Or, third indication information (additional PCI index) may be added to the configuration information of the SRS, where the third indication information indicates a cell to which the SRS belongs, thereby corresponding to a case where the UL-only TRP scenario is in another cell different from a macro cell.

Or, for an aperiodic SRS, the second network device sends first downlink control information (DCI format 0_1) to the terminal device, where the first downlink control information (DCI format 0_1) includes third indication information (additional PCI index/indicator).

Or, for the aperiodic SRS, the second network device sends first downlink control information (DCI format 0_1) to the terminal device, where the first downlink control information (DCI format 0_1) is used to indicate the terminal device to send a sounding reference signal to the first network device, and the sounding reference signal to be sent to the first network device includes third indication information (additional PCI index/indicator).

Or, for an aperiodic SRS, the second network device sends a third radio resource control message to the terminal device, where the third radio resource control message includes the third indication information.

Or, for an aperiodic SRS, the second network device sends a third media access control (MAC CE) message to the terminal device, where the third media access control message includes the third indication information, and the third media access control message includes aperiodicSRS-ResourceTrigger/SRS-ResourceSet.

In this way, the third indication information is indicated in multiple manners, so that the terminal device can determine a cell to which the SRS belongs.

Step 702: the terminal device receives a response message sent by a second network device, where the response message includes the timing advance, and the response message is sent by the first network device to the second network device.

In the embodiment, after the terminal device sends the SRS to the first network device, the first network device determines the TA according to the SRS. Then, the first network device sends the response message to the second network device, where the response message includes the TA. The second network device sends the response message carrying the TA to the terminal device.

Then the terminal device acquires the TA.

In the embodiment, the terminal device sends the SRS to the first network device based on a spatial filter, where the spatial filter is a spatial filter corresponding to the sounding reference signal or a specified spatial filter. For the UL-only TRP scenario (S-DCI based multi-TRP transmission), when there is no downlink communication link between the network device and the terminal device, the spatial filter used for sending the SRS in the random access procedure to the network device may be determined during the process of acquiring the TA, so that the terminal device may send the SRS in the random access procedure to the network device. Then, the first network device feeds back the response message carrying the TA to the terminal device through the second network device. Therefore, the terminal device can acquire the TA. In addition, for the UL-only TRP scenario (S-DCI based multi-TRP transmission), when there is no downlink communication link between the network device and the terminal device, during the process of acquiring the TA, the spatial filter used for sending the SRS in the random access procedure to the network device and the transmission power used for sending the SRS in the random access procedure to the network device are determined, so that the terminal device may send the SRS in the random access procedure to the network device and acquire the TA.

FIG. 8 is a schematic flowchart of a method for acquiring a timing advance provided by an embodiment of the present disclosure. As shown in FIG. 8, the embodiment of the present disclosure provides the method for acquiring the timing advance, which may be applied to the network device in the aforementioned 5G system architecture, where the network device is a first network device. Through the method, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA; furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA. The method provided by the embodiment includes the following steps:
step 801: a first network device receives Msg1 sent by a terminal device based on a spatial filter, where the Msg1 includes a preamble, and the preamble is used to determine the timing advance; or receives a sounding reference signal sent by a terminal device based on a spatial filter, where the sounding reference signal is used to determine the timing advance; where the spatial filter is a spatial filter corresponding to the sounding reference signal or the spatial filter is a specified spatial filter;
step 802: the first network device sends a response message to a second network device, where the response message includes the timing advance, and the response message is used to be fed back to the terminal device.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point.

In the embodiment, reference may be made to the description of the embodiment shown in FIG. 2 for the transmission power for sending the Msg1.

In some embodiments, the path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device; or the path loss power of the uplink-only reception point is a sum of the downlink path loss power of the second network device and path loss offset power between the first network device and the second network device.

In some embodiments, transmission power for sending the sounding reference signal is a minimum value of the following powers: a maximum transmission power of the terminal device and a first preset power; where the first preset power is a sum of a power value and a transmission power difference.

The transmission power difference is a power difference between transmission power of the sounding reference signal sent by the first network device and transmission power of the sounding reference signal sent by the second network device.

The power value represents a sum of the following information: received power of the sounding reference signal, transmission bandwidth of the sounding reference signal, a preset power compensation factor, downlink path loss information, and an adjustment amount of transmission power of a physical uplink shared channel of the terminal device.

For detailed content of the above method, reference may be made to the description of the corresponding method embodiment in the aforementioned embodiments. Their implementation principles and technical effects are similar, and details are not described herein again in the embodiment.

FIG. 9 is a schematic flowchart of a method for acquiring a timing advance provided by an embodiment of the present disclosure. As shown in FIG. 9, the embodiment of the present disclosure provides the method for acquiring the timing advance, which may be applied to the network device in the aforementioned 5G system architecture, where the network device is a second network device. Through the method, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA; furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA. The method provided by the embodiment includes the following steps.

Step 901: a second network device sends first indication information to a terminal device, where the first indication information is used to indicate a sounding reference signal associated with Msg1.

The first indication information is used to send the Msg1 to a first network device based on a spatial filter corresponding to the sounding reference signal indicated by the first indication information, where the Msg1 includes a preamble, and the preamble is used to determine the timing advance; or the first indication information is used to send a sounding reference signal to a first network device based on a spatial filter corresponding to the sounding reference signal indicated by the first indication information, where the sounding reference signal is used to determine the timing advance, or the spatial filter is a specified spatial filter;

Step 902: the second network device receives a response message sent by a first network device, and sends the response message to the terminal device, where the response message includes a timing advance.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, the method provided by the embodiment further includes:
sending first indication information to a terminal device, where the first indication information is used to indicate a sounding reference signal associated with Msg1.

In some embodiments, the sending the first indication information to the terminal device includes:
sending first downlink control information to the terminal device; where the first downlink control information includes the first indication information; or sending a first radio resource control message to the terminal device; where the first radio resource control message includes the first indication information; or sending a first media access control message to the terminal device; where the first media access control message includes the first indication information.

In some embodiments, the method provided by the embodiment further includes:
sending second indication information to the terminal device; where the second indication information is used to indicate the number of transmission repetitions of the Msg1.

In some embodiments, the sending the second indication information to the terminal device includes:
sending a second radio resource control message to the terminal device; where the second radio resource control message includes the second indication information; or sending a second media access control message to the terminal device; where the second media access control message includes the second indication information.

In some embodiments, configuration information of the sounding reference signal indicates time-domain resources for sending the sounding reference signal.

Alternatively, the method provided by the embodiment further includes: sending the third indication information to the terminal device, where the third indication information is used to indicate the cell to which the sounding reference signal belongs.

In some embodiments, the sending the third indication information to the terminal device includes:
sending first downlink control information to the terminal device; where the first downlink control information includes the third indication information, or the first downlink control information is used to indicate the terminal device to send the sounding reference signal, and the sounding reference signal to be sent to the first network device includes the third indication information;
or sending a third radio resource control message to the terminal device; where the third radio resource control message includes the third indication information;
or sending a third media access control message to the terminal device; where the third media access control message includes the third indication information.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point;

In the embodiment, reference may be made to the introduction of the embodiment shown in FIG. 2 for the transmission power for sending Msg1.

For example, the path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device; or the path loss power of the uplink-only reception point is a sum of the downlink path loss power of the second network device and path loss offset power between the first network device and the second network device.

In some embodiments, the method provided by the embodiment further includes:
sending fifth indication information to the terminal device; where the fifth indication information is used to indicate the path loss power of the uplink-only reception point, or the fifth indication information is used to indicate the uplink received signal power difference.

In some embodiments, the sending the fifth indication information to the terminal device includes:
sending second downlink control information to the terminal device; where the second downlink control information includes the fifth indication information;
or sending higher-layer signaling to the terminal device; where the higher-layer signaling includes the fifth indication information.

In some embodiments, transmission power for sending the sounding reference signal is a minimum value of the following powers: a maximum transmission power of the terminal device and a first preset power; where the first preset power is a sum of a power value and a transmission power difference.

The transmission power difference is a power difference between transmission power of the sounding reference signal sent by the first network device and transmission power of the sounding reference signal sent by the second network device.

The power value represents a sum of the following information: received power of the sounding reference signal, transmission bandwidth of the sounding reference signal, a preset power compensation factor, downlink path loss information, and an adjustment amount of transmission power of a physical uplink shared channel of the terminal device.

In some embodiments, the method provided by the embodiment further includes:
sending fourth indication information to the terminal device; where the fourth indication information is used to indicate the transmission power difference.

In some embodiments, the sending the fourth indication information to the terminal device includes:
sending first downlink control information to the terminal device, where the first downlink control information includes the fourth indication information;
or sending a fourth radio resource control message to the terminal device; where the fourth radio resource control message includes the fourth indication information;
or sending a fourth media access control message to the terminal device; where the fourth media access control message includes the fourth indication information.

In some embodiments, the method provided by the embodiment further includes:
sending sixth indication information to the terminal device; where the sixth indication information is used to indicate a spatial filter with optimal performance; and a spatial filter indicated by the sixth indication information is used to send Msg3 to the first network device based on the spatial filter.

For detailed content of the above method, reference may be made to the description of the corresponding method embodiment in the aforementioned embodiments. Their implementation principles and technical effects are similar, and details are not described herein again in the embodiment.

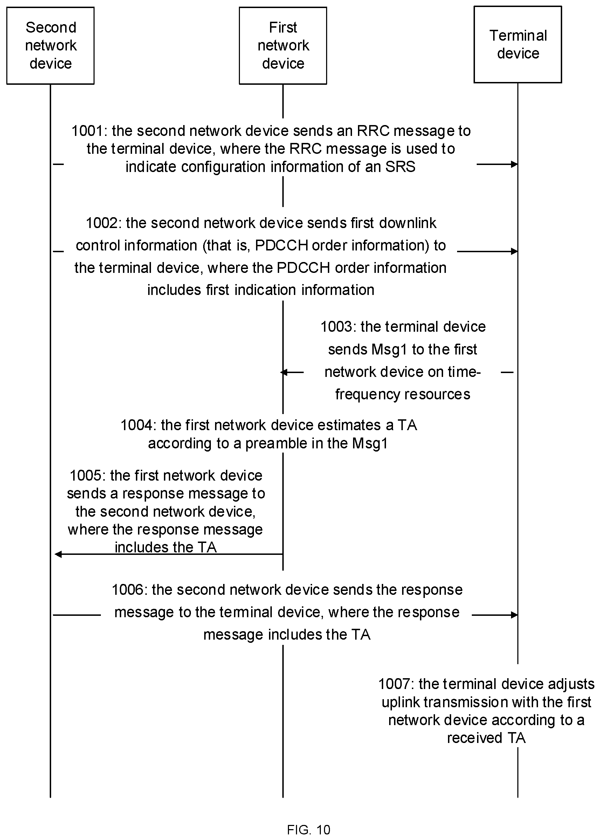

FIG. 10 is a schematic signaling interaction flowchart of a method for acquiring a timing advance provided by an embodiment of the present disclosure. As shown in FIG. 10, based on the aforementioned embodiments, the embodiment describes a signaling interaction process in detail. The method includes the following steps.

Step 1001: the second network device sends an RRC message to the terminal device, where the RRC message is used to indicate configuration information of an SRS.

For example, the second network device configures a TCI-UL-State for the terminal device by using the RRC message.

Step 1002: the second network device sends first downlink control information (that is, PDCCH order information) to the terminal device, where the PDCCH order information includes first indication information, and the first indication information is used to indicate an SRS associated with Msg1.

The PDCCH order information (DCI format 1_0) includes the first indication information, and the first indication information is SRS-Resource #1 (which is an SRS indication field, namely, an SRS ID indicator). Therefore, the first indication information indicates that the SRS associated with the Msg1 is SRS-Resource #1.

A spatial filter (i.e., a beam) of SRS-Resource #1 is a spatial filter of the configured TCI-UL-State-ID#1.

Step 1003: the terminal device sends the Msg1 to the first network device on time-frequency resources, where the Msg1 includes a preamble (preamble).

Indication information (preamble index) of the preamble is indicated by a corresponding field in the PDCCH order information. The time-frequency resources for sending the Msg1 are determined by a spatial filter (RO) associated with indication information (SSB index) of an SSB in the PDCCH order information.

The spatial filter for sending the Msg1 adopts the spatial filter of the aforementioned SRS-Resource #1, namely, the spatial filter of TCI-UL-State-ID#1.

For the transmission power of the Msg1, reference may be made to the introduction of FIG. 2.

Step 1004: after receiving the Msg1 sent by the terminal device, the first network device estimates a TA according to the preamble in the Msg1.

Step 1005: the first network device sends a response message to the second network device, where the response message includes the TA.

The first network device may send an RAR MAC PDU message to the second network device, where the RAR MAC PDU message includes the TA. For example, the RAR MAC PDU message carries a TAG ID, and the TAG ID indicates the TA.

Step 1006: the second network device sends the response message to the terminal device, where the response message includes the TA.

The second network device may send the RAR MAC PDU message to the terminal device, where the RAR MAC PDU message includes the TA. For example, the RAR MAC PDU message carries the TAG ID, and the TAG ID indicates the TA.

Step 1007: the terminal device adjusts uplink transmission with the first network device according to a received TA.

For example, the terminal device adjusts uplink transmission PUSCH/PUCCH/SRS with the first network device according to the received TA.

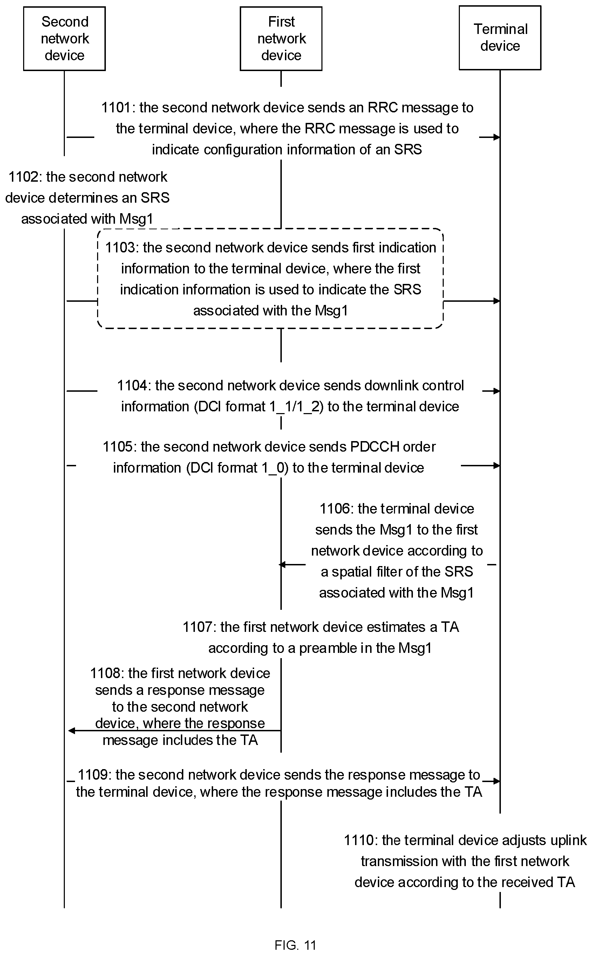

FIG. 11 is a schematic signaling interaction flowchart of a method for acquiring a timing advance provided by an embodiment of the present disclosure. As shown in FIG. 11, based on the aforementioned embodiments, the embodiment describes a signaling interaction process in detail. The method includes the following steps.

Step 1101: the second network device sends an RRC message to the terminal device, where the RRC message is used to indicate configuration information of an SRS.

Step 1102: the second network device determines an SRS associated with Msg1.

That is, the second network device establishes an association between the Msg1 and the SRS. For example, PRACH occasion 1 is associated with SRS resource 1, PRACH occasion 2 is associated with SRS resource 2, and PRACH occasion 3 is associated with SRS resource 3.

Optionally, step 1103: the second network device sends first indication information to the terminal device, where the first indication information is used to indicate the SRS associated with the Msg1.

For example, the first indication information is sent by using an RRC message or a MAC CE message. Alternatively, the first indication information has been predefined for the terminal device.

Step 1104: the second network device sends downlink control information (DCI format 1_1/1_2) to the terminal device, where the downlink control information is used to indicate that a spatial filter indicated in TCI-UL-State-Id#1 is used for sending of a subsequent uplink channel/signal of the terminal device.

Step 1105: the second network device sends PDCCH order information (DCI format 1_0) to the terminal device, where the PDCCH order information includes indication information (preamble index) of a preamble and indication information (SSB index) of an SSB, and the PDCCH order information is used to trigger the terminal device to send the Msg1 to a first network device.

Step 1106: the terminal device sends the Msg1 to the first network device according to a spatial filter of the SRS associated with the Msg1, where the Msg1 includes the preamble (preamble).

The spatial filter of the SRS associated with the Msg1 is a beam indicated in TCI-UL-State-ID#1 indicated by the second network device.

For the transmission power of the Msg1, reference may be made to the introduction of FIG. 2.

Step 1107: after receiving the Msg1 sent by the terminal device, the first network device estimates a TA according to the preamble in the Msg1.

Step 1108: the first network device sends a response message to the second network device, where the response message includes the TA.

The first network device may send an RAR MAC PDU message to the second network device, where the RAR MAC PDU message includes the TA. For example, the RAR MAC PDU message carries a TAG ID, and the TAG ID indicates the TA.

Step 1109: the second network device sends the response message to the terminal device, where the response message includes the TA.

The second network device may send the RAR MAC PDU message to the terminal device, where the RAR MAC PDU message includes the TA. For example, the RAR MAC PDU message carries the TAG ID, and the TAG ID indicates the TA.

Step 1110: the terminal device adjusts uplink transmission with the first network device according to the received TA.

For example, the terminal device adjusts uplink transmission PUSCH/PUCCH/SRS with the first network device according to the received TA.

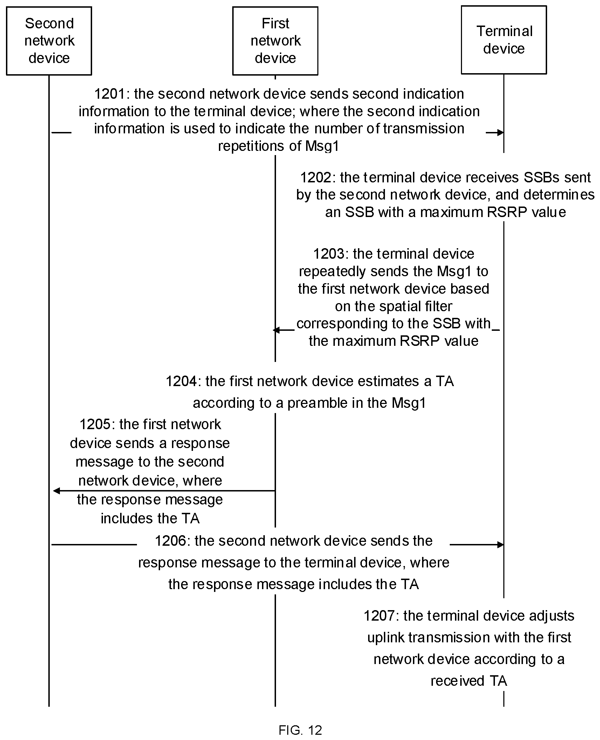

FIG. 12 is a schematic signaling interaction flowchart of a method for acquiring a timing advance provided by an embodiment of the present disclosure. As shown in FIG. 12, based on the aforementioned embodiments, the embodiment describes a signaling interaction process in detail. The method includes the following steps.

Step 1201: the second network device sends second indication information to the terminal device; where the second indication information is used to indicate the number of transmission repetitions of Msg1.

The second network device configures the terminal device to send the Msg1 to the first network device by using a fixed spatial filter. In addition, the second network device configures the number N of transmission repetitions of the Msg1 for the terminal device.

Step 1202: the terminal device receives SSBs sent by the second network device, and determines an SSB with a maximum RSRP value.

For example, the terminal device receives SSB1, SSB2, and SSB3 sent by the second network device. Then, the terminal device performs measurement and comparison on RSRP of each received SSB, and determines that SSB3 has the maximum RSRP value.

Step 1203: the terminal device repeatedly sends the Msg1 to the first network device based on the spatial filter corresponding to the SSB with the maximum RSRP value.

For the transmission power of the Msg1, reference may be made to the introduction of FIG. 2.

Step 1204: the first network device receives the Msg1 based on different spatial filters. In addition, the first network device estimates a TA according to a preamble in the Msg1.

Step 1205: the first network device sends a response message to the second network device, where the response message includes the TA.

The first network device may send an RAR MAC PDU message to the second network device, where the RAR MAC PDU message includes the TA. For example, the RAR MAC PDU message carries a TAG ID, and the TAG ID indicates the TA.

Step 1206: the second network device sends the response message to the terminal device, where the response message includes the TA.

The second network device may send the RAR MAC PDU message to the terminal device, where the RAR MAC PDU message includes the TA. For example, the RAR MAC PDU message carries the TAG ID, and the TAG ID indicates the TA.

Step 1207: the terminal device adjusts uplink transmission with the first network device according to a received TA.

For example, the terminal device adjusts uplink transmission PUSCH/PUCCH/SRS with the first network device according to the received TA.

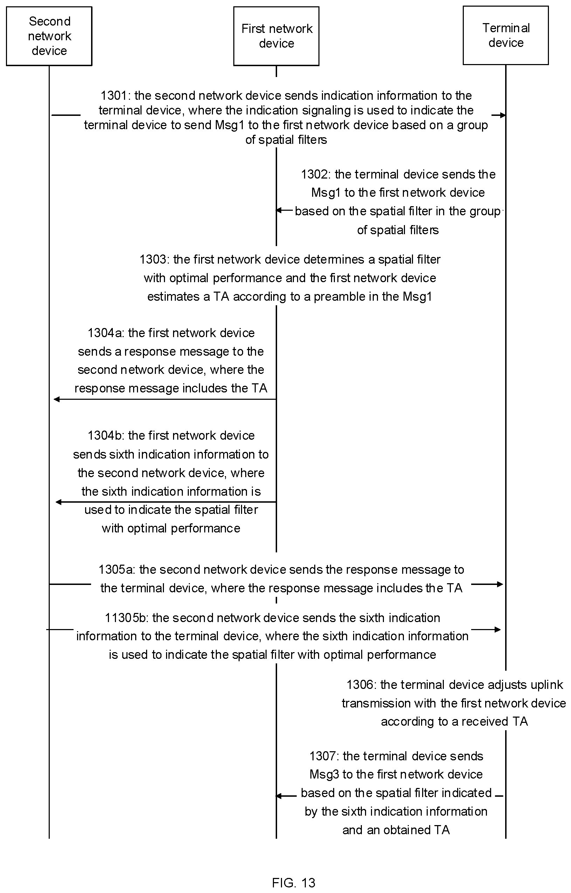

FIG. 13 is a schematic signaling interaction flowchart of a method for acquiring a timing advance provided by an embodiment of the present disclosure. As shown in FIG. 13, based on the aforementioned embodiments, the embodiment describes a signaling interaction process in detail. The method includes the following steps.

Step 1301: the second network device sends indication information to the terminal device, where the indication signaling is used to indicate the terminal device to send Msg1 to the first network device based on a group of spatial filters; and the indication signaling is an L1 DCI indication or higher-layer signaling configuration.

Step 1302: the terminal device sends the Msg1 to the first network device based on the spatial filter in the group of spatial filters, where the Msg1 includes a preamble.

For example, the terminal device sends the Msg1 to the first network device based on each different spatial filter in each of different time slots. For example, the terminal device sends the Msg1 to the first network device based on spatial filter 1 on a time slot 1; the terminal device sends the Msg1 to the first network device based on spatial filter 2 on a time slot 2; the terminal device sends the Msg1 to the first network device based on spatial filter 3 on a time slot 3.

For the transmission power of the Msg1, reference may be made to the introduction of FIG. 2.

Step 1303: the first network device receives the Msg1 sent by the terminal device based on a fixed spatial filter. In addition, the first network device determines a spatial filter with optimal performance. The first network device estimates a TA according to the preamble in the Msg1.

Step 1304a: the first network device sends a response message to the second network device, where the response message includes the TA.

The first network device may send an RAR MAC PDU message to the second network device, where the RAR MAC PDU message includes the TA. For example, the RAR MAC PDU message carries a TAG ID, and the TAG ID indicates the TA.

Step 1304b: the first network device sends sixth indication information to the second network device, where the sixth indication information is used to indicate the spatial filter with optimal performance.

For example, the first network device sends an RAR MAC PDU message to the second network device, where the RAR MAC PDU message includes the sixth indication information.

Step 1305a: the second network device sends the response message to the terminal device, where the response message includes the TA.

The second network device may send the RAR MAC PDU message to the terminal device, where the RAR MAC PDU message includes the TA. For example, the RAR MAC PDU message carries the TAG ID, and the TAG ID indicates the TA.

Step 11305b: the second network device sends the sixth indication information to the terminal device, where the sixth indication information is used to indicate the spatial filter with optimal performance.

For example, the second network device may send an RAR MAC PDU message to the terminal device, where the RAR MAC PDU message includes the sixth indication information.

Step 1306: the terminal device adjusts uplink transmission with the first network device according to a received TA.

For example, the terminal device adjusts uplink transmission PUSCH/PUCCH/SRS with the first network device according to the received TA.

Step 1307: the terminal device sends Msg3 to the first network device based on the spatial filter indicated by the sixth indication information and an obtained TA.

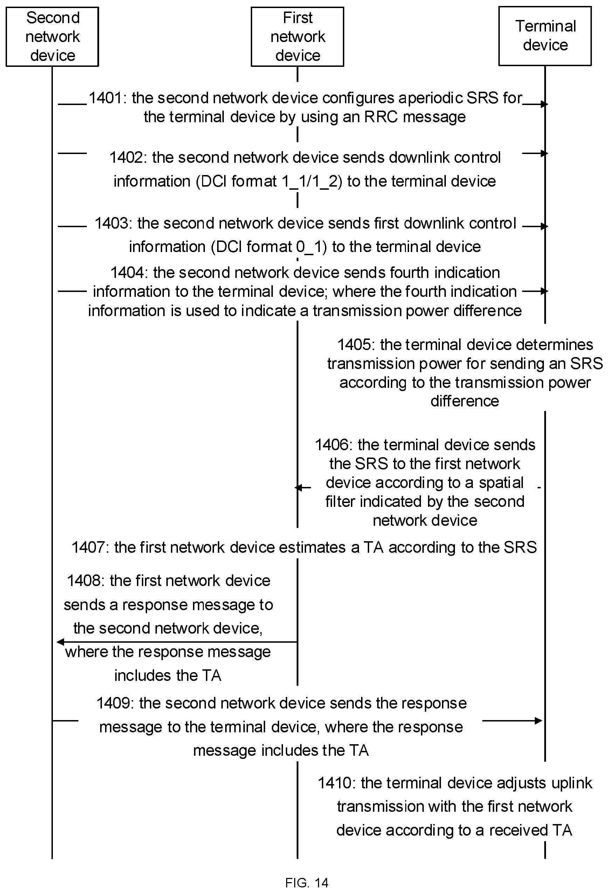

FIG. 14 is a schematic signaling interaction flowchart of a method for acquiring a timing advance provided by an embodiment of the present disclosure. As shown in FIG. 14, based on the aforementioned embodiments, the embodiment describes a signaling interaction process in detail. The method includes the following steps.

Step 1401: the second network device configures an aperiodic SRS for the terminal device by using an RRC message.

For example, two SRS sets are configured, namely, an SRS resource set 1 and an SRS resource set 2. Where the SRS resource set 2 includes third indication information (additional PCI index), and the third indication information is used to indicate a cell to which a sounding reference signal belongs.

Step 1402: on a time slot k, the second network device sends downlink control information (DCI format 1_1/1_2) to the terminal device. The downlink control information is used to indicate the terminal device to send SRS by using a spatial filter indicated in TCI-UL-State in subsequent uplink transmission.

For example, the downlink control information indicates the terminal device to send SRS to the network device by using a spatial filter for receiving SSB-index-#1.

At this time, it is assumed that the SSB may also be sent to the terminal device in a UL-only-TRP scenario.

Step 1403: on a time slot k, the second network device sends first downlink control information (DCI format 0_1) to the terminal device.

The first downlink control information (DCI format 0_1) includes an SRS_request field (SRS_request field), and the first downlink control information is used to trigger the terminal device to send the SRS to a first network device.

Alternatively, for aperiodic SRS, the first downlink control information (DCI format 0_1) includes the third indication information (additional PCI index).

Step 1404: the second network device sends fourth indication information to the terminal device; where the fourth indication information is used to indicate a transmission power difference.

The transmission power difference is a delta_power_offset value. The transmission power difference represents a difference between power of SRS resource set 1 sent by the terminal device to the second network device and power of SRS resource set 2 sent by the terminal device to the first network device.

The fourth indication information may be independent signaling, or carried by an RRC message, or carried by a MAC CE message.

Step 1405: the terminal device determines transmission power for sending an SRS according to the transmission power difference.

For a manner of calculating the transmission power of the SRS, reference may be made to the aforementioned embodiments.

Step 1406: the terminal device sends the SRS to the first network device according to a spatial filter indicated by the second network device.

The downlink control information (DCI format 1_1/1_2) indicates the terminal device to send the SRS by using the spatial filter indicated in TCI-UL-State in subsequent uplink transmission. Therefore, the terminal device sends the SRS to the first network device according to the spatial filter indicated in TCI-UL-State.

Step 1407: the first network device estimates a TA according to the SRS.

Step 1408: the first network device sends a response message to the second network device, where the response message includes the TA.

The first network device may send an RAR MAC PDU message to the second network device, where the RAR MAC PDU message includes the TA. For example, the RAR MAC PDU message carries a TAG ID, and the TAG ID indicates the TA.

Step 1409: the second network device sends the response message to the terminal device, where the response message includes the TA.

The second network device may send the RAR MAC PDU message to the terminal device, where the RAR MAC PDU message includes the TA. For example, the RAR MAC PDU message carries the TAG ID, and the TAG ID indicates the TA.

Step 1410: the terminal device adjusts uplink transmission with the first network device according to a received TA.

For example, the terminal device adjusts uplink transmission PUSCH/PUCCH/SRS with the first network device according to the received TA.

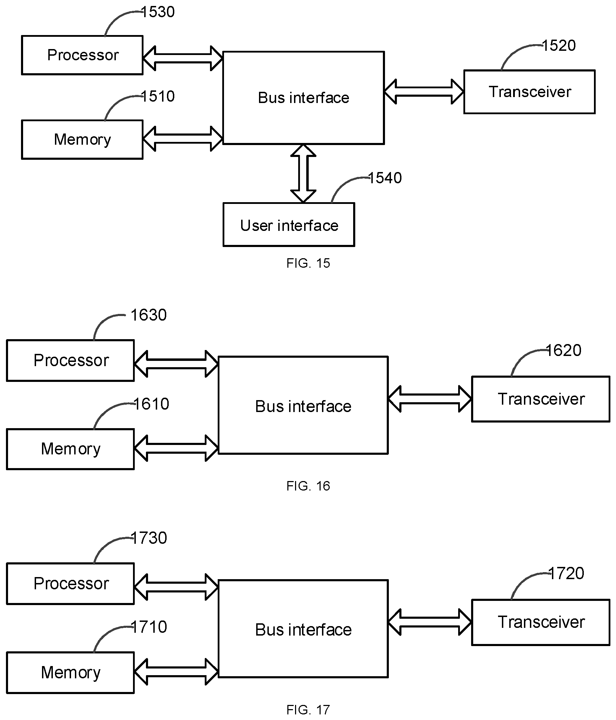

FIG. 15 is a schematic structural diagram of an apparatus for acquiring a timing advance provided by an embodiment of the present disclosure. As shown in FIG. 15, the embodiment of the present disclosure provides the apparatus for acquiring the timing advance, which may be applied to the terminal device in the aforementioned 5G system architecture. Through the apparatus, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA; furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA. The apparatus includes: a memory 1510, a transceiver 1520, and a processor 1530. The transceiver 1520 is configured to receive and transmit data under control of the processor 1530.

In FIG. 15, a bus architecture may include any number of interconnected buses and bridges, which link together various circuits of one or more processors 1530 represented by the processor 1530 and a memory 1510 represented by the memory 1510. The bus architecture may also link together various other circuits such as peripheral devices, voltage regulators, and power management circuits, which are well known in the art, and therefore, no further description is provided herein. The bus interface provides an interface. The transceiver 1520 may be multiple elements, including a transmitter and a receiver, and provide units for communicating with various other apparatuses over transmission media. The transmission media include, the transmission media include wireless channels, wired channels, optical cables, and the like. For different user equipment, a user interface 1540 may also be an interface capable of externally or internally connecting required devices, and connected devices include but not limited to, keypads, displays, speakers, microphones, joysticks, and the like.

The processor 1530 is responsible for managing the bus architecture and general processing, and the memory 1510 may store data used by the processor 1530600 in performing operations.

Optionally, the processor 1530 may be a CPU (central processing unit), an ASIC (Application Specific Integrated Circuit, application specific integrated circuit), an FPGA (Field-Programmable Gate Array, field-programmable gate array), or a CPLD (Complex Programmable Logic Device, complex programmable logic device). The processor 1530 may also adopt a multi-core architecture.

The processor 1530 is configured to execute any method provided by embodiments of the present disclosure according to obtained executable instructions by invoking a program stored in the memory 1510. The processor 1530 and the memory 1510 may also be physically arranged separately.

In the embodiment, the memory 1510 is configured to store a computer program. The transceiver 1520 is configured to receive and transmit data under the control of the processor 1530. The processor 1530 is configured to read the computer program in the memory 1510 and perform the following operations:
sending Msg1 to a first network device based on a spatial filter, where the Msg1 includes a preamble, the preamble is used to determine the timing advance, and the spatial filter is a spatial filter corresponding to a sounding reference signal or the spatial filter is a specified spatial filter; or sending a sounding reference signal to a first network device based on a spatial filter, where the sounding reference signal is used to determine the timing advance, and the spatial filter is a spatial filter corresponding to the sounding reference signal or the spatial filter is a specified spatial filter;
receiving a response message sent by a second network device, where the response message includes the timing advance, and the response message is sent by the first network device to the second network device.

In some embodiments, when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, the processor 1530 is further configured to: receive first indication information sent by the second network device, where the first indication information is used to indicate the sounding reference signal associated with the Msg1.

In some embodiments, when receiving the first indication information sent by the second network device, the processor 1530 is configured to:
receive first downlink control information sent by the second network device; where the first downlink control information includes the first indication information;
or receive a first radio resource control message sent by the second network device; where the first radio resource control message includes the first indication information;
or receive a first media access control message sent by the second network device; where the first media access control message includes the first indication information.

In some embodiments, the processor 1530 is further configured to: receive second indication information sent by the second network device, where the second indication information is used to indicate the number of transmission repetitions of the Msg1.

In some embodiments, when receiving the second indication information sent by the second network device, the processor 1530 is configured to:
receive a second radio resource control message sent by the second network device; where the second radio resource control message includes the second indication information;
or receive a second media access control message sent by the second network device; where the second media access control message includes the second indication information.

In some embodiments, configuration information of the sounding reference signal indicates time-domain resources for sending the sounding reference signal.

Alternatively, in some embodiments, the processor 1530 is further configured to: receive third indication information sent by the second network device, where the third indication information is used to indicate a cell to which the sounding reference signal belongs.

In some embodiments, when receiving the third indication information sent by the second network device, the processor 1530 is configured to:
receive first downlink control information sent by the second network device; where the first downlink control information includes the third indication information; or the first downlink control information is used to indicate the terminal device to send the sounding reference signal, and the sounding reference signal to be sent to the first network device includes the third indication information;
or receive a third radio resource control message sent by the second network device; where the third radio resource control message includes the third indication information;
or receive a third media access control message sent by the second network device; where the third media access control message includes the third indication information.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point.

The path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In some embodiments, the processor 1530 is further configured to: receive fifth indication information sent by the second network device; where the fifth indication information is used to indicate the path loss power of the uplink-only reception point, or the fifth indication information is used to indicate the uplink received signal power difference.

In some embodiments, when receiving the fifth indication information sent by the second network device, the processor 1530 is configured to:
receive second downlink control information sent by the second network device; where the second downlink control information includes the fifth indication information;
or receive higher-layer signaling sent by the second network device; where the higher-layer signaling includes the fifth indication information.

In some embodiments, transmission power for sending the sounding reference signal is a minimum value of the following powers: a maximum transmission power of the terminal device and a first preset power; where the first preset power is a sum of a power value and a transmission power difference.

The transmission power difference is a power difference between transmission power of the sounding reference signal sent by the first network device and transmission power of the sounding reference signal sent by the second network device.

The power value represents a sum of the following information: received power of the sounding reference signal, transmission bandwidth of the sounding reference signal, a preset power compensation factor, downlink path loss information, and an adjustment amount of transmission power of a physical uplink shared channel of the terminal device.

In some embodiments, the processor 1530 is further configured to: receive fourth indication information sent by the second network device, where the fourth indication information is used to indicate the transmission power difference.

In some embodiments, when receiving the fourth indication information sent by the second network device, the processor 1530 is configured to:
receive first downlink control information sent by the second network device, where the first downlink control information includes the fourth indication information;
or receive a fourth radio resource control message sent by the second network device; where the fourth radio resource control message includes the fourth indication information;
or receive a fourth media access control message sent by the second network device; where the fourth media access control message includes the fourth indication information.

In some embodiments, the processor 1530 is further configured to:
receive sixth indication information sent by the second network device, where the sixth indication information is used to indicate a spatial filter with optimal performance; and send Msg3 to the first network device based on the spatial filter indicated by the sixth indication information.

It should be noted herein that the above apparatus provided by the embodiment of the present disclosure can implement all method steps implemented by the aforementioned method embodiments and achieve the same technical effects, and parts and beneficial effects in the embodiment that are the same as those in the method embodiments are not described herein again.

FIG. 16 is a schematic structural diagram of an apparatus for acquiring a timing advance provided by an embodiment of the present disclosure. As shown in FIG. 16, the embodiment of the present disclosure provides the apparatus for acquiring the timing advance, which may be applied to the network device in the aforementioned 5G system architecture, where the network device is a first network device. Through the apparatus, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA; furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA. The apparatus includes: a memory 1610, a transceiver 1620, and a processor 1630. The transceiver 1620 is configured to receive and transmit data under control of the processor 1630.

In FIG. 16, a bus architecture may include any number of interconnected buses and bridges, which link together various circuits of one or more processors 1630 represented by the processor 1630 and a memory 1610 represented by the memory 1610. The bus architecture may also link together various other circuits such as peripheral devices, voltage regulators, and power management circuits, which are well known in the art, and therefore, no further description is provided herein. The bus interface provides an interface. The transceiver 1620 may be multiple elements, including a transmitter and a receiver, and provide units for communicating with various other apparatuses over transmission media. The transmission media include wireless channels, wired channels, optical cables, and the like. The processor 1630 is responsible for managing the bus architecture and general processing, and the memory 1610 may store data used by the processor 1630x10 in performing operations.

The processor 1630 may be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD). The processor 1630 may also adopt a multi-core architecture.

The processor 1630 is configured to execute any method provided by embodiments of the present disclosure according to obtained executable instructions by invoking a computer program stored in the memory 1610. The processor 1630 and the memory 1610 may also be physically arranged separately.

In the embodiment, the memory 1610 is configured to store a computer program. The transceiver 1620 is configured to receive and transmit data under the control of the processor 1630. The processor 1630 is configured to read the computer program in the memory 1610 and perform the following operations:
receiving Msg1 sent by a terminal device based on a spatial filter, where the Msg1 includes a preamble, the preamble is used to determine the timing advance, and the spatial filter is a spatial filter corresponding to a sounding reference signal or the spatial filter is a specified spatial filter; or receiving a sounding reference signal sent by a terminal device based on a spatial filter, where the sounding reference signal is used to determine the timing advance, and the spatial filter is a spatial filter corresponding to the sounding reference signal or the spatial filter is a specified spatial filter;
sending a response message to a second network device, where the response message includes the timing advance, and the response message is used to be fed back to the terminal device.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point.

The path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In some embodiments, transmission power for sending the sounding reference signal is a minimum value of the following powers: a maximum transmission power of the terminal device and a first preset power; where the first preset power is a sum of a power value and a transmission power difference.

The transmission power difference is a power difference between transmission power of the sounding reference signal sent by the first network device and transmission power of the sounding reference signal sent by the second network device.

The power value represents a sum of the following information: received power of the sounding reference signal, transmission bandwidth of the sounding reference signal, a preset power compensation factor, downlink path loss information, and an adjustment amount of transmission power of a physical uplink shared channel of the terminal device.

It should be noted herein that the above apparatus provided by the embodiment of the present disclosure can implement all method steps implemented by the aforementioned method embodiments and achieve the same technical effects, and parts and beneficial effects in the embodiment that are the same as those in the method embodiments are not described herein again.

FIG. 17 is a schematic structural diagram of an apparatus for acquiring a timing advance provided by an embodiment of the present disclosure. As shown in FIG. 17, the embodiment of the present disclosure provides the apparatus for acquiring the timing advance, which may be applied to the network device in the aforementioned 5G system architecture, where the network device is a second network device. Through the apparatus, for a UL-only TRP scenario (S-DCI based multi-TRP transmission), when there is no downlink communication link between the network device and the terminal device, during a process of acquiring a TA, a spatial filter used for sending a message in a random access procedure to the network device is determined, so that the terminal device can send the message in the random access procedure to the network device and the terminal device can acquire the TA; furthermore, for a UL-only TRP scenario (S-DCI based multi-TRP transmission), when there is no downlink communication link between the network device and the terminal device, during a process of acquiring a TA, a spatial filter used for sending a message in a random access procedure to the network device and a transmission power used for sending the message in the random access procedure to the network device are determined; and thus the terminal device can send the message in the random access procedure to the network device and the terminal device can acquire the TA. The apparatus includes: a memory 1710, a transceiver 1720, and a processor 1730. The transceiver 1720 is configured to receive and transmit data under control of the processor 1730.

In FIG. 17, a bus architecture may include any number of interconnected buses and bridges, which link together various circuits of one or more processors 1730 represented by the processor 1730 and a memory 1710 represented by the memory 1710. The bus architecture may also link together various other circuits such as peripheral devices, voltage regulators, and power management circuits, which are well known in the art, and therefore, no further description is provided herein. The bus interface provides an interface. The transceiver 1720 may be multiple elements, including a transmitter and a receiver, and provide units for communicating with various other apparatuses over transmission media. The transmission media include wireless channels, wired channels, optical cables, and the like. The processor 1730 is responsible for managing the bus architecture and general processing, and the memory 1710 may store data used by the processor 1730x10 in performing operations.

The processor 1730 may be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD). The processor 1730 may also adopt a multi-core architecture.

The processor 1730 is configured to execute any method provided by embodiments of the present disclosure according to obtained executable instructions by invoking a computer program stored in the memory 1710. The processor 1730 and the memory 1710 may also be physically arranged separately.

In the embodiment, the memory 1710 is configured to store a computer program. The transceiver 1720 is configured to receive and transmit data under the control of the processor 1730. The processor 1730 is configured to read the computer program in the memory 1710 and perform the following operations:
sending first indication information to a terminal device, where the first indication information is used to indicate a sounding reference signal associated with Msg1;
where the first indication information is used to send the Msg1 to a first network device based on a spatial filter corresponding to the sounding reference signal indicated by the first indication information, where the Msg1 includes a preamble, the preamble is used to determine the timing advance, and the spatial filter is a spatial filter corresponding to the sounding reference signal or the spatial filter is a specified spatial filter; or the first indication information is used to send a sounding reference signal to a first network device based on a spatial filter corresponding to the sounding reference signal indicated by the first indication information, and the sounding reference signal is used to determine the timing advance, or the spatial filter is a specified spatial filter;
receiving a response message sent by the first network device, and sending the response message to the terminal device, where the response message includes the timing advance.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, the processor 1730 is further configured to:
send the first indication information to a terminal device, where the first indication information is used to indicate the sounding reference signal associated with Msg1.

In some embodiments, the sending the first indication information to the terminal device includes:
sending first downlink control information to the terminal device; where the first downlink control information includes the first indication information;
or sending a first radio resource control message to the terminal device; where the first radio resource control message includes the first indication information;
or sending a first media access control message to the terminal device; where the first media access control message includes the first indication information.

In some embodiments, the processor 1730 is further configured to: send second indication information to the terminal device; where the second indication information is used to indicate the number of transmission repetitions of the Msg1.

In some embodiments, when sending the second indication information to the terminal device, the processor 1730 is configured to:
send a second radio resource control message to the terminal device; where the second radio resource control message includes the second indication information;
or send a second media access control message to the terminal device; where the second media access control message includes the second indication information.

In some embodiments, configuration information of the sounding reference signal indicates time-domain resources for sending the sounding reference signal.

Alternatively, the processor 1730 is further configured to: send third indication information to the terminal device, where the third indication information is used to indicate the cell to which the sounding reference signal belongs.

In some embodiments, when sending the third indication information to the terminal device, the processor 1730 is configured to:
send first downlink control information to the terminal device; where the first downlink control information includes the third indication information, or the first downlink control information is used to indicate the terminal device to send the sounding reference signal, and the sounding reference signal to be sent to the first network device includes the third indication information;
or send a third radio resource control message to the terminal device; where the third radio resource control message includes the third indication information;
or send a third media access control message to the terminal device; where the third media access control message includes the third indication information.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point.

The path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In some embodiments, the processor 1730 is further configured to:
send fifth indication information to the terminal device; where the fifth indication information is used to indicate the path loss power of the uplink-only reception point, or the fifth indication information is used to indicate the uplink received signal power difference.

In some embodiments, when sending the fifth indication information to the terminal device, the processor 1730 is configured to:
send second downlink control information to the terminal device; where the second downlink control information includes the fifth indication information;
or send higher-layer signaling to the terminal device; where the higher-layer signaling includes the fifth indication information.

In some embodiments, transmission power for sending the sounding reference signal is a minimum value of the following powers: a maximum transmission power of the terminal device and a first preset power; where the first preset power is a sum of a power value and a transmission power difference.

The transmission power difference is a power difference between transmission power of the sounding reference signal sent by the first network device and transmission power of the sounding reference signal sent by the second network device.

The power value represents a sum of the following information: received power of the sounding reference signal, transmission bandwidth of the sounding reference signal, a preset power compensation factor, downlink path loss information, and an adjustment amount of transmission power of a physical uplink shared channel of the terminal device.

In some embodiments, the processor 1730 is further configured to: send fourth indication information to the terminal device; where the fourth indication information is used to indicate the transmission power difference.

In some embodiments, when sending the fourth indication information to the terminal device, the processor 1730 is configured to:
send first downlink control information to the terminal device, where the first downlink control information includes the fourth indication information;
or send a fourth radio resource control message to the terminal device; where the fourth radio resource control message includes the fourth indication information;
or send a fourth media access control message to the terminal device; where the fourth media access control message includes the fourth indication information.

In some embodiments, the processor 1730 is further configured to:
send sixth indication information to the terminal device; where the sixth indication information is used to indicate a spatial filter with optimal performance; and a spatial filter indicated by the sixth indication information is used to send Msg3 to the first network device based on the spatial filter.

It should be noted herein that the above apparatus provided by the embodiment of the present disclosure can implement all method steps implemented by the aforementioned method embodiments and achieve the same technical effects, and parts and beneficial effects in the embodiment that are the same as those in the method embodiments are not described herein again.

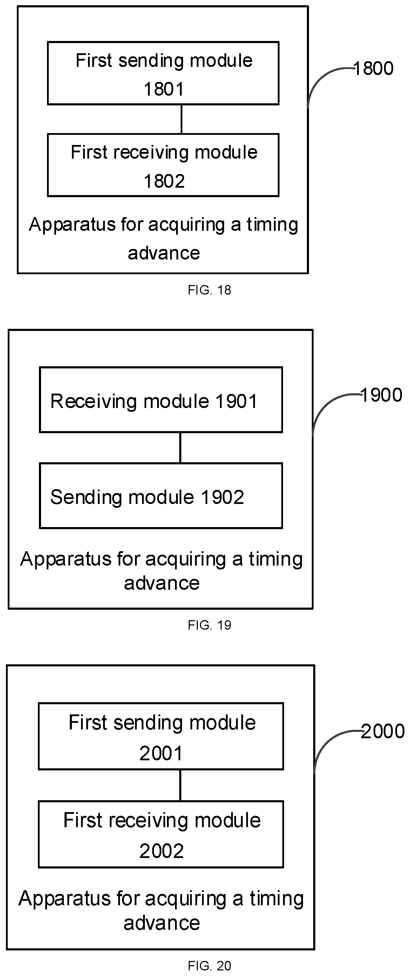

FIG. 18 is a schematic structural diagram of an apparatus for acquiring a timing advance provided by an embodiment of the present disclosure. As shown in FIG. 18, the embodiment of the present disclosure provides the apparatus for acquiring the timing advance, which may be applied to the terminal device in the aforementioned 5G system architecture. The apparatus 1800 includes:
a first sending module 1801, configured to send Msg1 to a first network device based on a spatial filter, where the Msg1 includes a preamble, the preamble is used to determine the timing advance, and the spatial filter is a spatial filter corresponding to a sounding reference signal or the spatial filter is a specified spatial filter; or send a sounding reference signal to a first network device based on a spatial filter, where the sounding reference signal is used to determine the timing advance, and the spatial filter is a spatial filter corresponding to the sounding reference signal or the spatial filter is a specified spatial filter;
a first receiving module 1802, configured to receive a response message sent by a second network device, where the response message includes the timing advance, and the response message is sent by the first network device to the second network device.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, the apparatus provided by the embodiment further includes: a second receiving module, configured to receive first indication information sent by the second network device, where the first indication information is used to indicate the sounding reference signal associated with the Msg1.

In some embodiments, when receiving the first indication information sent by the second network device, the second receiving module is configured to:
receive first downlink control information sent by the second network device; where the first downlink control information includes the first indication information;
or receive a first radio resource control message sent by the second network device; where the first radio resource control message includes the first indication information;
or receive a first media access control message sent by the second network device; where the first media access control message includes the first indication information.

In some embodiments, the apparatus provided by the embodiment further includes: a third receiving module, configured to receive second indication information sent by the second network device, where the second indication information is used to indicate the number of transmission repetitions of the Msg1.

In some embodiments, when receiving the second indication information sent by the second network device, the third receiving module is configured to:
receive a second radio resource control message sent by the second network device; where the second radio resource control message includes the second indication information;
or receive a second media access control message sent by the second network device; where the second media access control message includes the second indication information.

In some embodiments, configuration information of the sounding reference signal indicates time-domain resources for sending the sounding reference signal.

Alternatively, the apparatus provided by the embodiment further includes: a fourth receiving module, configured to receive third indication information sent by the second network device, where the third indication information is used to indicate a cell to which the sounding reference signal belongs.

In some embodiments, when receiving the third indication information sent by the second network device, the fourth receiving module is configured to:
receive first downlink control information sent by the second network device; where the first downlink control information includes the third indication information; or the first downlink control information is used to indicate the terminal device to send the sounding reference signal, and the sounding reference signal to be sent to the first network device includes the third indication information;
or receive a third radio resource control message sent by the second network device; where the third radio resource control message includes the third indication information;
or receive a third media access control message sent by the second network device; where the third media access control message includes the third indication information.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point.

The path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In some embodiments, the apparatus provided by the embodiment further includes:
a fifth receiving module, configured to receive fifth indication information sent by the second network device; where the fifth indication information is used to indicate the path loss power of the uplink-only reception point, or the fifth indication information is used to indicate the uplink received signal power difference.

In some embodiments, when receiving the fifth indication information sent by the second network device, the fifth receiving module is configured to:
receive second downlink control information sent by the second network device; where the second downlink control information includes the fifth indication information;
or receive higher-layer signaling sent by the second network device; where the higher-layer signaling includes the fifth indication information.

In some embodiments, transmission power for sending the sounding reference signal is a minimum value of the following powers: a maximum transmission power of the terminal device and a first preset power; where the first preset power is a sum of a power value and a transmission power difference.

The transmission power difference is a power difference between transmission power of the sounding reference signal sent by the first network device and transmission power of the sounding reference signal sent by the second network device.

The power value represents a sum of the following information: received power of the sounding reference signal, transmission bandwidth of the sounding reference signal, a preset power compensation factor, downlink path loss information, and an adjustment amount of transmission power of a physical uplink shared channel of the terminal device.

In some embodiments, the apparatus provided by the embodiment further includes:
a sixth receiving module, configured to receive fourth indication information sent by the second network device, where the fourth indication information is used to indicate the transmission power difference.

In some embodiments, when receiving the fourth indication information sent by the second network device, the sixth receiving module is configured to:
receive first downlink control information sent by the second network device, where the first downlink control information includes the fourth indication information;
or receive a fourth radio resource control message sent by the second network device; where the fourth radio resource control message includes the fourth indication information;
or receive a fourth media access control message sent by the second network device; where the fourth media access control message includes the fourth indication information.

In some embodiments, the apparatus provided by the embodiment further includes:
a seventh receiving module, configured to receive sixth indication information sent by the second network device; where the sixth indication information is used to indicate a spatial filter with optimal performance;
a second sending module, configured to send Msg3 to the first network device based on the spatial filter indicated by the sixth indication information.

It should be noted herein that the above apparatus provided by the embodiment of the present disclosure can implement all method steps implemented by the aforementioned method embodiments and achieve the same technical effects, and parts and beneficial effects in the embodiment that are the same as those in the method embodiments are not described herein again.

FIG. 19 is a schematic structural diagram of an apparatus for acquiring a timing advance provided by an embodiment of the present disclosure. As shown in FIG. 19, the embodiment of the present disclosure provides the apparatus for acquiring the timing advance, which may be applied to the network device in the aforementioned 5G system architecture, where the network device is a first network device. The apparatus 1900 includes:
a receiving module 1901, configured to receive Msg1 sent by a terminal device based on a spatial filter, where the Msg1 includes a preamble, the preamble is used to determine the timing advance, and the spatial filter is a spatial filter corresponding to a sounding reference signal or the spatial filter is a specified spatial filter; or receive a sounding reference signal sent by the terminal device based on a spatial filter, where the sounding reference signal is used to determine the timing advance, and the spatial filter is a spatial filter corresponding to the sounding reference signal or the spatial filter is a specified spatial filter;
a sending module 1902, configured to send a response message to a second network device, where the response message includes the timing advance, and the response message is used to be fed back to the terminal device.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point.

The path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In some embodiments, transmission power for sending the sounding reference signal is a minimum value of the following powers: a maximum transmission power of the terminal device and a first preset power; where the first preset power is a sum of a power value and a transmission power difference.

The transmission power difference is a power difference between transmission power of the sounding reference signal sent by the first network device and transmission power of the sounding reference signal sent by the second network device.

The power value represents a sum of the following information: received power of the sounding reference signal, transmission bandwidth of the sounding reference signal, a preset power compensation factor, downlink path loss information, and an adjustment amount of transmission power of a physical uplink shared channel of the terminal device.

It should be noted herein that the above apparatus provided by the embodiment of the present disclosure can implement all method steps implemented by the aforementioned method embodiments and achieve the same technical effects, and parts and beneficial effects in the embodiment that are the same as those in the method embodiments are not described herein again.

FIG. 20 is a schematic structural diagram of an apparatus for acquiring a timing advance provided by an embodiment of the present disclosure. As shown in FIG. 20, the embodiment of the present disclosure provides the apparatus for acquiring the timing advance, which may be applied to the network device in the aforementioned 5G system architecture, where the network device is a second network device. The apparatus 2000 includes:
a first sending module 2001, configured to send first indication information to a terminal device, where the first indication information is used to indicate a sounding reference signal associated with Msg1.
where the first indication information is used to send the Msg1 to a first network device based on a spatial filter corresponding to the sounding reference signal indicated by the first indication information, where the Msg1 includes a preamble, the preamble is used to determine the timing advance, and the spatial filter is a spatial filter corresponding to the sounding reference signal or the spatial filter is a specified spatial filter; or the first indication information is used to send a sounding reference signal to a first network device based on a spatial filter corresponding to the sounding reference signal indicated by the first indication information, and the sounding reference signal is used to determine the timing advance, or the spatial filter is a specified spatial filter;
a first receiving module 2002, configured to receive a response message sent by the first network device, and sending the response message to the terminal device, where the response message includes the timing advance.

In some embodiments, when the spatial filter is the spatial filter corresponding to the sounding reference signal, the spatial filter is a spatial filter corresponding to a sounding reference signal associated with the Msg1.

When the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, where the preset spatial filter combination includes multiple spatial filters.

In some embodiments, the apparatus provided by the present disclosure further includes:
a second sending module, configured to send first indication information to a terminal device, where the first indication information is used to indicate a sounding reference signal associated with Msg1.

In some embodiments, when sending the first indication information to the terminal device, the second sending module is configured to:
send first downlink control information to the terminal device; where the first downlink control information includes the first indication information;
or send a first radio resource control message to the terminal device; where the first radio resource control message includes the first indication information;
or send a first media access control message to the terminal device; where the first media access control message includes the first indication information.

In some embodiments, the apparatus provided by the present disclosure further includes:
a third sending module, configured to send second indication information to the terminal device; where the second indication information is used to indicate the number of transmission repetitions of the Msg1.

In some embodiments, when sending the second indication information to the terminal device, the third sending module is configured to:
send a second radio resource control message to the terminal device; where the second radio resource control message includes the second indication information;
or send a second media access control message to the terminal device; where the second media access control message includes the second indication information.

In some embodiments, configuration information of the sounding reference signal indicates time-domain resources for sending the sounding reference signal.

Alternatively, the apparatus provided by the present disclosure further includes: a third sending module, configured to send third indication information to the terminal device, where the third indication information is used to indicate a cell to which the sounding reference signal belongs.

In some embodiments, when sending the third indication information to the terminal device, the third sending module is configured to:
send first downlink control information to the terminal device; where the first downlink control information includes the third indication information, or the first downlink control information is used to indicate the terminal device to send the sounding reference signal, and the sounding reference signal to be sent to the first network device includes the third indication information;
or send a third radio resource control message to the terminal device; where the third radio resource control message includes the third indication information;
or send a third media access control message to the terminal device; where the third media access control message includes the third indication information.

In some embodiments, when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; where the sounding reference signal set includes multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, where the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

In some embodiments, transmission power for sending the Msg1 is a minimum value of the following powers: a maximum transmission power of a terminal device and a second preset power; where the second preset power is a sum of target received power of the Msg1 and path loss power of an uplink-only reception point.

The path loss power of the uplink-only reception point is a difference between received power configured for the sounding reference signal and transmission power configured for the sounding reference signal; or the path loss power of the uplink-only reception point is a sum of downlink path loss power of the first network device and an uplink received signal power difference, where the uplink received signal power difference is a difference between uplink received signal power of the first network device and uplink received signal power of the second network device.

In some embodiments, the apparatus provided by the present disclosure further includes:
a fifth sending module, configured to send fifth indication information to the terminal device; where the fifth indication information is used to indicate the path loss power of the uplink-only reception point, or the fifth indication information is used to indicate the uplink received signal power difference.

In some embodiments, when sending the fifth indication information to the terminal device, the fifth sending module is configured to:
send second downlink control information to the terminal device; where the second downlink control information includes the fifth indication information;
or send higher-layer signaling to the terminal device; where the higher-layer signaling includes the fifth indication information.

In some embodiments, transmission power for sending the sounding reference signal is a minimum value of the following powers: a maximum transmission power of the terminal device and a first preset power; where the first preset power is a sum of a power value and a transmission power difference.

The transmission power difference is a power difference between transmission power of the sounding reference signal sent by the first network device and transmission power of the sounding reference signal sent by the second network device.

The power value represents a sum of the following information: received power of the sounding reference signal, transmission bandwidth of the sounding reference signal, a preset power compensation factor, downlink path loss information, and an adjustment amount of transmission power of a physical uplink shared channel of the terminal device.

In some embodiments, the apparatus provided by the present disclosure further includes:
a sixth sending module, configured to send fourth indication information to the terminal device; where the fourth indication information is used to indicate the transmission power difference.

In some embodiments, when sending the fourth indication information to the terminal device, the sixth sending module is configured to:
send first downlink control information to the terminal device, where the first downlink control information includes the fourth indication information;
or send a fourth radio resource control message to the terminal device; where the fourth radio resource control message includes the fourth indication information;
or send a fourth media access control message to the terminal device; where the fourth media access control message includes the fourth indication information.

In some embodiments, the apparatus provided by the present disclosure further includes:
a seventh sending module, configured to send sixth indication information to the terminal device; where the sixth indication information is used to indicate a spatial filter with optimal performance; and a spatial filter indicated by the sixth indication information is used to send Msg3 to the first network device based on the spatial filter.

It should be noted herein that the above apparatus provided by the embodiment of the present disclosure can implement all method steps implemented by the aforementioned method embodiments and achieve the same technical effects, and parts and beneficial effects in the embodiment that are the same as those in the method embodiments are not described herein again.

It should be noted that the division of units in embodiments of the present disclosure is schematic, and is only a logical function division, and another division manner may be adopted in actual implementation. In addition, functional units in various embodiments of the present disclosure may be integrated into one processing unit, or each unit may exist alone physically, or two or more units may be integrated into one unit. The above integrated unit may be implemented in the form of hardware or in the form of a software functional unit.

When the integrated unit is implemented in the form of a software functional unit and sold or used as an independent product, it may be stored in a processor-readable storage medium. Based on such understanding, the technical solutions of the present disclosure essentially, or the part thereof contributing to the related art, or all or part of the technical solutions may be embodied in the form of a software product, the computer software product is stored in a storage medium and includes several indications for enabling a computer device (which may be a personal computer, a server, a network device, or the like) or a processor (processor) to perform all or part of the steps of the methods in various embodiments of the present disclosure.

The embodiment of the present disclosure provides a processor-readable storage medium. The processor-readable storage medium stores a computer program, and the computer program is used for enabling a processor to execute the method for acquiring the timing advance provided in any one of the aforementioned embodiments.

The processor-readable storage medium may be any available medium that a processor can access or a data storage device, including but not limited to a magnetic memory (for example, a floppy disk, a hard disk, a magnetic tape, a magneto-optical disk (MO), or the like), an optical memory (for example, a CD, a DVD, a BD, an HVD, or the like), and a semiconductor memory (for example, a ROM, an EPROM, an EEPROM, a non-volatile memory (NAND FLASH), a solid state disk (SSD), or the like).

Those skilled in the art should understand that the embodiments of the present disclosure can be provided as a method, a system, or a computer program product. Therefore, the present disclosure can take the form of a fully hardware embodiment, a fully software embodiment, or an embodiment combining software and hardware aspects. Moreover, the present disclosure can take the form of a computer program product implemented on one or more computer-usable storage medium (including but not limited to disk storages and optical storages) which contains computer-usable program codes.

The present disclosure is described with reference to the flowcharts and/or block diagrams of the method, device (system), and computer program product according to the embodiments of the present disclosure. It should be understood that each flow and/or block in the flowcharts and/or block diagrams, as well as the combination of flows and/or blocks in the flowcharts and/or block diagrams, can be implemented by computer executable instructions. These computer executable instructions can be provided to a general-purpose computer, a dedicated computer, an embedded processor, or other programmable data processing device's processor to produce an equipment, to cause the instructions executed through the computer or a processor of other programmable data processing device to produce an apparatus that is used to implement the functions specified in one or more flows in the flowcharts and/or one or more blocks in the block diagrams.

These processor executable instructions can also be stored in a processor-readable memory capable of guiding a computer or other programmable data processing device to operate in a specific manner. This enables the instructions stored in the processor-readable memory to produce a manufactured product including an instruction apparatus, and the instruction apparatus implements the functions specified in one or more flows in the flowcharts and/or one or more blocks in the block diagrams.

Obviously, those skilled in the art can make various modifications and variations to the present disclosure without departing from the spirit and scope of the present disclosure. Thus, if these modifications and variations of the present disclosure fall within the scope of the claims and their equivalents of the present disclosure, the present disclosure also intends to include these modifications and variations.

## Claims

1. A method for acquiring a timing advance, **characterized by** comprising:
sending Msg1 to a first network device based on a spatial filter, wherein the Msg1 comprises a preamble, the preamble is used to determine the timing advance, and the spatial filter is a spatial filter corresponding to a sounding reference signal or the spatial filter is a specified spatial filter; or sending a sounding reference signal to a first network device based on a spatial filter, wherein the sounding reference signal is used to determine the timing advance, and the spatial filter is a spatial filter corresponding to the sounding reference signal or the spatial filter is a specified spatial filter;
receiving a response message sent by a second network device, wherein the response message comprises the timing advance, and the response message is sent by the first network device to the second network device.

2. The method according to claim 1, wherein when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, wherein the preset spatial filter combination comprises multiple spatial filters.

3. The method according to claim 2, further comprising: receiving first indication information sent by the second network device, wherein the first indication information is used to indicate the sounding reference signal associated with the Msg1.

4. The method according to claim 2, further comprising: receiving second indication information sent by the second network device, wherein the second indication information is used to indicate the number of transmission repetitions of the Msg1.

5. The method according to claim 1, further comprising:
determining configuration information of the sounding reference signal, wherein the configuration information is used to indicate time-domain resources for sending the sounding reference signal;
or receiving third indication information sent by the second network device, wherein the third indication information is used to indicate a cell to which the sounding reference signal belongs.

6. The method according to any one of claims 1 to 5, wherein when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; wherein the sounding reference signal set comprises multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, wherein the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

7. The method according to any one of claims 1 to 5, wherein transmission power for sending the sounding reference signal is a minimum value of the following powers: a maximum transmission power of the terminal device and a first preset power; wherein the first preset power is determined based on a transmission power difference;
the transmission power difference is a power difference between transmission power of the sounding reference signal sent by the first network device and transmission power of the sounding reference signal sent by the second network device.

8. The method according to claim 7, further comprising: receiving fourth indication information sent by the second network device, wherein the fourth indication information is used to indicate the transmission power difference.

9. The method according to any one of claims 1 to 5, wherein transmission power for sending the Msg1 is a minimum value of the following powers: a maximum transmission power of a terminal device and a second preset power; wherein the second preset power is a sum of target received power of the Msg1 and path loss power of an uplink-only reception point.

10. The method according to claim 9, wherein the path loss power of the uplink-only reception point is any one of the following:
a difference between received power configured for the sounding reference signal and transmission power configured for the sounding reference signal;
or a sum of downlink path loss power of the first network device and an uplink received signal power difference, wherein the uplink received signal power difference is a difference between uplink received signal power of the first network device and uplink received signal power of the second network device;
or a sum of downlink path loss power of the first network device and path loss offset power between the first network device and the second network device.

11. A method for acquiring a timing advance, **characterized by** comprising:
receiving Msg1 sent by a terminal device based on a spatial filter, wherein the Msg1 comprises a preamble, the preamble is used to determine the timing advance, and the spatial filter is a spatial filter corresponding to a sounding reference signal or the spatial filter is a specified spatial filter; or receiving a sounding reference signal sent by the terminal device based on a spatial filter, wherein the sounding reference signal is used to determine the timing advance, and the spatial filter is a spatial filter corresponding to the sounding reference signal or the spatial filter is a specified spatial filter;
sending a response message to a second network device, wherein the response message comprises the timing advance, and the response message is used to be fed back to the terminal device.

12. The method according to claim 11, wherein when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, wherein the preset spatial filter combination comprises multiple spatial filters.

13. The method according to claim 11, wherein when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; wherein the sounding reference signal set comprises multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, wherein the state information pool is a joint transmission indication state information pool, or, the state information pool is an uplink transmission indication state information pool;
or the spatial filter is a spatial filter indicated by latest unified transmission indication state information sent by the second network device, or, the spatial filter is a spatial filter indicated by latest uplink transmission indication state information sent by the second network device.

14. The method according to any one of claims 11 to 13, wherein transmission power for sending the sounding reference signal is a minimum value of the following powers: a maximum transmission power of the terminal device and a first preset power; wherein the first preset power is determined based on a transmission power difference;
the transmission power difference is a power difference between transmission power of the sounding reference signal sent by the first network device and transmission power of the sounding reference signal sent by the second network device.

15. The method according to any one of claims 11 to 13, wherein transmission power for sending the Msg1 is a minimum value of the following powers: a maximum transmission power of a terminal device and a second preset power; wherein the second preset power is a sum of target received power of the Msg1 and path loss power of an uplink-only reception point.

16. The method according to claim 15, wherein the path loss power of the uplink-only reception point is any one of the following:
a difference between received power configured for the sounding reference signal and transmission power configured for the sounding reference signal;
or a sum of downlink path loss power of a first network device and an uplink received signal power difference, wherein the uplink received signal power difference is a difference between uplink received signal power of the first network device and uplink received signal power of the second network device;
or a sum of downlink path loss power of a first network device and path loss offset power between the first network device and the second network device.

17. A method for acquiring a timing advance, **characterized by** comprising:
sending first indication information to a terminal device, wherein the first indication information is used to indicate a sounding reference signal associated with Msg1;
wherein the first indication information is used to send the Msg1 to a first network device based on a spatial filter corresponding to the sounding reference signal indicated by the first indication information, wherein the Msg1 comprises a preamble, the preamble is used to determine the timing advance, and the spatial filter is a spatial filter corresponding to the sounding reference signal or the spatial filter is a specified spatial filter; or the first indication information is used to send a sounding reference signal to a first network device based on a spatial filter corresponding to the sounding reference signal indicated by the first indication information, and the sounding reference signal is used to determine the timing advance, or the spatial filter is a specified spatial filter;
receiving a response message sent by the first network device, and sending the response message to the terminal device, wherein the response message comprises the timing advance.

18. The method according to claim 17, wherein when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, wherein the preset spatial filter combination comprises multiple spatial filters.

19. The method according to claim 18, further comprising: sending the first indication information to the terminal device, wherein the first indication information is used to indicate the sounding reference signal associated with the Msg1.

20. The method according to claim 18, further comprising: sending second indication information to the terminal device, wherein the second indication information is used to indicate the number of transmission repetitions of the Msg1.

21. The method according to claim 17, wherein configuration information of the sounding reference signal indicates time-domain resources for sending the sounding reference signal;
or the method further comprises: sending third indication information to the terminal device, wherein the third indication information is used to indicate a cell to which the sounding reference signal belongs.

22. The method according to any one of claims 17 to 21, wherein when the spatial filter is the spatial filter corresponding to the sounding reference signal, the spatial filter is any one of the following:
the spatial filter is a spatial filter for sending a sounding reference signal contained in uplink transmission indication state information;
or the spatial filter is a spatial filter for receiving a synchronization signal block contained in uplink transmission indication state information;
or the spatial filter is a spatial filter for receiving a synchronization signal block contained in joint transmission indication state information;
or the spatial filter is a spatial filter indicated by transmission indication state information for the sounding reference signal;
or the spatial filter is a spatial filter indicated by uplink transmission indication state information corresponding to a sounding reference signal with a minimum identifier in a sounding reference signal set; wherein the sounding reference signal set comprises multiple sounding reference signals;
or the spatial filter is a spatial filter indicated by transmission indication state information corresponding to a sounding reference signal with a minimum identifier in a sounding reference signal set;
or the spatial filter is a spatial filter indicated by transmission indication state information with a minimum identifier in a state information pool, wherein the state information pool is a joint transmission indication state information pool, or, the state information pool is an uplink transmission indication state information pool;
or the spatial filter is a spatial filter indicated by latest unified transmission indication state information sent by a second network device, or, the spatial filter is a spatial filter indicated by latest uplink transmission indication state information sent by the second network device.

23. The method according to any one of claims 17 to 21, wherein transmission power for sending the sounding reference signal is a minimum value of the following powers: a maximum transmission power of the terminal device and a first preset power; wherein the first preset power is determined based on a transmission power difference;
the transmission power difference is a power difference between transmission power of the sounding reference signal sent by the first network device and transmission power of the sounding reference signal sent by the second network device.

24. The method according to claim 23, further comprising:
sending fourth indication information to the terminal device; wherein the fourth indication information is used to indicate the transmission power difference.

25. The method according to any one of claims 17 to 21, wherein transmission power for sending the Msg1 is a minimum value of the following powers: a maximum transmission power of a terminal device and a second preset power; wherein the second preset power is a sum of target received power of the Msg1 and path loss power of an uplink-only reception point.

26. The method according to claim 25, wherein the path loss power of the uplink-only reception point is any one of the following:
a difference between received power configured for the sounding reference signal and transmission power configured for the sounding reference signal;
or a sum of downlink path loss power of the first network device and an uplink received signal power difference, wherein the uplink received signal power difference is a difference between uplink received signal power of the first network device and uplink received signal power of the second network device;
or a sum of downlink path loss power of the first network device and path loss offset power between the first network device and the second network device.

27. An apparatus for acquiring a timing advance, **characterized by** comprising: a memory, a transceiver, and a processor:
wherein the memory is configured to store a computer program; the transceiver is configured to receive and transmit data under control of the processor; and the processor is configured to read the computer program in the memory and perform the following operations:
sending Msg1 to a first network device based on a spatial filter, wherein the Msg1 comprises a preamble, the preamble is used to determine the timing advance, and the spatial filter is a spatial filter corresponding to a sounding reference signal or the spatial filter is a specified spatial filter; or sending a sounding reference signal to a first network device based on a spatial filter, wherein the sounding reference signal is used to determine the timing advance, and the spatial filter is a spatial filter corresponding to the sounding reference signal or the spatial filter is a specified spatial filter;
receiving a response message sent by a second network device, wherein the response message comprises the timing advance, and the response message is sent by the first network device to the second network device.

28. The apparatus according to claim 27, wherein when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, wherein the preset spatial filter combination comprises multiple spatial filters.

29. The apparatus according to claim 27 or 28, wherein transmission power for sending the sounding reference signal is a minimum value of the following powers: a maximum transmission power of the terminal device and a first preset power; wherein the first preset power is determined based on a transmission power difference;
the transmission power difference is a power difference between transmission power of the sounding reference signal sent by the first network device and transmission power of the sounding reference signal sent by the second network device.

30. An apparatus for acquiring a timing advance, **characterized by** comprising: a memory, a transceiver, and a processor:
wherein the memory is configured to store a computer program; the transceiver is configured to receive and transmit data under control of the processor; and the processor is configured to read the computer program in the memory and perform the following operations:
receiving Msg1 sent by a terminal device based on a spatial filter, wherein the Msg1 comprises a preamble, the preamble is used to determine the timing advance, and the spatial filter is a spatial filter corresponding to a sounding reference signal or the spatial filter is a specified spatial filter; or receiving a sounding reference signal sent by the terminal device based on a spatial filter, wherein the sounding reference signal is used to determine the timing advance, and the spatial filter is a spatial filter corresponding to the sounding reference signal or the spatial filter is a specified spatial filter;
sending a response message to a second network device, wherein the response message comprises the timing advance, and the response message is used to be fed back to the terminal device.

31. The apparatus according to claim 30, wherein when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, wherein the preset spatial filter combination comprises multiple spatial filters.

32. The apparatus according to claim 30 or 31, wherein transmission power for sending the sounding reference signal is a minimum value of the following powers: a maximum transmission power of the terminal device and a first preset power; wherein the first preset power is determined based on a transmission power difference;
the transmission power difference is a power difference between transmission power of the sounding reference signal sent by the first network device and transmission power of the sounding reference signal sent by the second network device.

33. An apparatus for acquiring a timing advance, **characterized by** comprising: a memory, a transceiver, and a processor:
wherein the memory is configured to store a computer program; the transceiver is configured to receive and transmit data under control of the processor; and the processor is configured to read the computer program in the memory and perform the following operations:
sending first indication information to a terminal device, wherein the first indication information is used to indicate a sounding reference signal associated with Msg1;
wherein the first indication information is used to send the Msg1 to a first network device based on a spatial filter corresponding to the sounding reference signal indicated by the first indication information, wherein the Msg1 comprises a preamble, the preamble is used to determine the timing advance, and the spatial filter is a spatial filter corresponding to the sounding reference signal or the spatial filter is a specified spatial filter; or the first indication information is used to send a sounding reference signal to a first network device based on a spatial filter corresponding to the sounding reference signal indicated by the first indication information, and the sounding reference signal is used to determine the timing advance, or the spatial filter is a specified spatial filter;
receiving a response message sent by the first network device, and sending the response message to the terminal device, wherein the response message comprises the timing advance.

34. The apparatus according to claim 33, wherein when the spatial filter is the spatial filter corresponding to the sounding reference signal, the spatial filter is a spatial filter corresponding to a sounding reference signal associated with the Msg1;
when the spatial filter is the specified spatial filter, the spatial filter is a spatial filter corresponding to a synchronization signal block with optimal reference signal received power when receiving the synchronization signal block, or the spatial filter is any spatial filter in a preset spatial filter combination, wherein the preset spatial filter combination comprises multiple spatial filters.

35. The apparatus according to claim 33 or 34, wherein transmission power for sending the sounding reference signal is a minimum value of the following powers: a maximum transmission power of the terminal device and a first preset power; wherein the first preset power is determined based on a transmission power difference;
the transmission power difference is a power difference between transmission power of the sounding reference signal sent by the first network device and transmission power of the sounding reference signal sent by the second network device.

36. An apparatus for acquiring a timing advance, **characterized by** comprising:
a first sending module, configured to send Msg1 to a first network device based on a spatial filter, wherein the Msg1 comprises a preamble, the preamble is used to determine the timing advance, and the spatial filter is a spatial filter corresponding to a sounding reference signal or the spatial filter is a specified spatial filter; or send a sounding reference signal to a first network device based on a spatial filter, wherein the sounding reference signal is used to determine the timing advance, and the spatial filter is a spatial filter corresponding to the sounding reference signal or the spatial filter is a specified spatial filter;
a first receiving module, configured to receive a response message sent by a second network device, wherein the response message comprises the timing advance, and the response message is sent by the first network device to the second network device.

37. An apparatus for acquiring a timing advance, **characterized by** comprising:
a receiving module, configured to receive Msg1 sent by a terminal device based on a spatial filter, wherein the Msg1 comprises a preamble, the preamble is used to determine the timing advance, and the spatial filter is a spatial filter corresponding to a sounding reference signal or the spatial filter is a specified spatial filter; or receive a sounding reference signal sent by the terminal device based on a spatial filter, wherein the sounding reference signal is used to determine the timing advance, and the spatial filter is a spatial filter corresponding to the sounding reference signal or the spatial filter is a specified spatial filter;
a sending module, configured to send a response message to a second network device, wherein the response message comprises the timing advance, and the response message is used to be fed back to the terminal device.

38. An apparatus for acquiring a timing advance, **characterized by** comprising:
a first sending module, configured to send first indication information to a terminal device, wherein the first indication information is used to indicate a sounding reference signal associated with Msg1;
wherein the first indication information is used to send the Msg1 to a first network device based on a spatial filter corresponding to the sounding reference signal indicated by the first indication information, wherein the Msg1 comprises a preamble, the preamble is used to determine the timing advance, and the spatial filter is a spatial filter corresponding to the sounding reference signal or the spatial filter is a specified spatial filter; or the first indication information is used to send a sounding reference signal to a first network device based on a spatial filter corresponding to the sounding reference signal indicated by the first indication information, and the sounding reference signal is used to determine the timing advance, or the spatial filter is a specified spatial filter;
a first receiving module, configured to receive a response message sent by the first network device, and sending the response message to the terminal device, wherein the response message comprises the timing advance.

39. A non-transitory readable storage medium, **characterized in that** the non-transitory readable storage medium stores a computer program, the computer program is configured to enable a processor to perform the method according to any one of claims 1 to 10, or the computer program is configured to enable a processor to perform the method according to any one of claims 11 to 16, or the computer program is configured to enable a processor to perform the method according to any one of claims 17 to 26.
